# EUROPÄISCHE PATENTSCHRIFT

(11) **EP 4 124 675 B1**
(45) Veröffentlichungstag und Bekanntmachung des Hinweises auf die Patenterteilung: **10.07.2024**
(21) Anmeldenummer: 21188434.1
(22) Anmeldetag: 29.07.2021
(51) Int. Cl.: C25B 3/07, C25B 3/25, C25B 9/19, C25B 9/21, C25B 13/02, C25B 13/07

(54) **BRUCHSTABILE TRENNWAND UMFASSEND FESTELEKTROLYTKERAMIKEN FÜR ELEKTROLYSEZELLEN**
FRACTURE-STABLE PARTITION COMPRISING SOLID ELECTROLYTE CERAMICS FOR ELECTROLYTIC CELLS
PAROI DE SÉPARATION RÉSISTANTE À LA RUPTURE COMPRENANT DES CÉRAMIQUES À ÉLECTROLYTE SOLIDE POUR CELLULES D'ÉLECTROLYSE

(43) Veröffentlichungstag der Anmeldung: 01.02.2023
(73) Patentinhaber: Evonik Operations GmbH, 45128 Essen (DE)
(72) Erfinder: REINSBERG, Philip Heinrich, 53227 Bonn (DE); HORN, Michael, 53859 Niederkassel (DE); STENNER, Patrik, 63452 Hanau (DE); STADTMÜLLER, Tobias, 63500 Seligenstadt (DE); RUWWE, Johannes, 53844 Troisdorf (DE); MALTER, Jutta, 64295 Darmstadt (DE)
(74) Vertreter: Evonik Patent Association

(56) Entgegenhaltungen:
- WO-A1-2008/076327
- GB-A- 2 207 685
- US-A1- 2006 226 022
- US-A1- 2010 181 189

## Beschreibung

Die vorliegende Erfindung betrifft in einem ersten Aspekt eine Trennwand **W,** welche sich zum Einsatz in einer Elektrolysezelle **E** eignet. Die Trennwand **W** umfasst ein Rahmenelement **R,** welches ein Randelement **R_{R}** und ein Trennelement **R_{T}** ausbildet. Das Rahmenelement **R** umfasst zwei einander gegenüberliegende Teile **R₁** und **R₂**, zwischen denen mindestens zwei alkalikationenleitende Festelektrolytkeramiken **F_{A}** und **F_{B}** angeordnet sind. Das Trennelement **R_{T}** liegt zwischen den von der Trennwand **W** umfassten alkalikationenleitende Festelektrolytkeramiken und trennt diese voneinander ab.

Die Erfindung zeichnet sich dadurch aus, dass die beiden Teile **R₁** und **R₂** durch mindestens ein Befestigungselement **B_{R}** am Randelement **R_{R}** und mindestens ein Befestigungselement **B_{T}** am Trennelement **R_{T}** aneinander befestigt sind.

Im Vergleich zu den Fällen gemäß Stand der Technik, in denen die Trennwand **W** den Festelektrolyten in einem Stück umfasst, ist diese Anordnung einerseits flexibler, da den einzelnen Keramiken mehr Freiheitsgrade zur Verfügung stehen, um z.B. mit Schrumpfung oder Ausdehnung auf Temperaturschwankungen zu reagieren. Dadurch erhöht sich die Stabilität gegenüber mechanischen Spannungen in der Keramik. Gleichzeitig wird die mechanische Stabilität der Anordnung der mindestens zwei Festelektrolytkeramiken zwischen den Teilen **R₁** und **R₂** dadurch erhöht, dass die Teile **R₁** und **R₂** sowohl am Randelement **R_{R}** als auch am Trennelement **R_{T}** durch mindestens ein Befestigungselement **B_{R}** bzw. **B_{T}** aneinander befestigt sind.

In einem zweiten Aspekt betrifft die vorliegende Erfindung eine Elektrolysezelle **E,** welche eine Kathodenkammer **K_{K}** umfasst, die durch die Trennwand **W** von der benachbarten Kammer, bei der es sich um eine Anodenkammer **K_{A}** oder eine Mittelkammer **K_{M}** der Elektrolysezelle **E** handelt, abgetrennt ist.

In einem dritten Aspekt betrifft die vorliegende Erfindung ein Verfahren zur Herstellung einer Alkalimetallalkoholatlösung in der Elektrolysezelle **E** gemäß dem zweiten Aspekt der Erfindung.

### 1. Hintergrund der Erfindung

Die elektrochemische Herstellung von Alkalimetallalkoholatlösungen ist ein wichtiger industrieller Prozess, der beispielsweise in der DE 103 60 758 A1, der US 2006/0226022 A1 und der WO 2005/059205 A1 beschrieben ist. Das Prinzip dieser Verfahren spiegelt sich in einer Elektrolysezelle wider, in deren Anodenkammer sich die Lösung eines Alkalisalzes, beispielsweise Kochsalz oder NaOH, und in deren Kathodenkammer sich der betreffende Alkohol oder eine niedrig konzentrierte alkoholische Lösung des betreffenden Alkalimetallalkoholates, beispielsweise Natriummethanolat oder Natriumethanolat, befinden. Die Kathodenkammer und die Anodenkammer sind durch eine das eingesetzte Alkalimetallion leitende Keramik getrennt, beispielsweise NaSICON oder ein Analogon für Kalium oder Lithium. Bei Anlegen eines Stroms entstehen an der Anode - wenn ein Chloridsalz des Alkalimetalls eingesetzt wird - Chlor und an der Kathode Wasserstoff und Alkoholationen. Der Ladungsausgleich erfolgt dadurch, dass Alkalimetallionen aus der Mittelkammer in die Kathodenkammer über die für sie selektive Keramik wandern. Der Ladungsausgleich zwischen Mittelkammer und Anodenkammer erfolgt durch die Wanderung von Kationen bei Einsatz von Kationenaustauschermembranen oder die Wanderung von Anionen bei Einsatz von Anionenaustauschermembranen oder durch Wanderung beider lonenarten bei Einsatz nichtspezifischer Diffusionsbarrieren. Dadurch erhöht sich die Konzentration des Alkalimetallalkoholats in der Kathodenkammer und es erniedrigt sich die Konzentration der Natriumionen im Anolyten.

NaSICON-Festelektrolyte werden auch bei der elektrochemischen Herstellung anderer Verbindungen eingesetzt:
WO 2014/008410 A1 beschreibt ein elektrolytisches Verfahren zur Herstellung von elementarem Titan oder Seltenen Erden. Dieses Verfahren beruht darauf, dass Titanchlorid aus TiOz und der entsprechenden Säure gebildet wird, dieses mit Natriumalkoholat zum Titaniumalkoholat und NaCl reagiert und schließlich elektrolytisch zu elementarem Titan und Natriumalkoholat umgesetzt wird.
WO 2007/082092 A2 und WO 2009/059315 A1 beschreiben Verfahren zur Herstellung von Biodiesel, in denen mithilfe von über NaSICON elektrolytisch hergestellten Alkoholaten zunächst Triglyceride in die entsprechenden Alkalimetalltriglyceride überführt werden und in einem zweiten Schritt mit elektrolytisch erzeugten Protonen zu Glycerin und dem jeweiligen Alkalimetallhydroxid umgesetzt werden.

Diese Festelektrolytkeramiken weisen allerdings typischerweise einige Nachteile auf. Beim Betrieb der Elektrolysezelle kommt es unweigerlich zu Temperaturschwankungen in der Zelle, durch welche sich die Festelektrolytkeramik ausdehnt oder schrumpft. Da diese Keramiken zerbrechlich sind, kann dies zu einem Bruch der Keramik führen.

Diese Problematik ergibt sich insbesondere bei den sich immer wieder wiederholenden An- und Abfahrprozessen, die beim Betrieb der Elektrolyse unumgänglich sind. Während des Aufheizens und Abkühlens kommt es zu Ausdehnungs- und Schrumpfungsphasen, wodurch sich die Keramik in der Elektrolysezelle hin- und herbewegt. Diese Bewegungen können aufgrund der unkontrollierten Kräfteverteilung in der Keramik dazu führen, dass diese bricht.

Daneben können Undichtigkeiten entstehen, die zu einer Leckage von Sole in Alkohol oder umgekehrt führen kann. Dadurch wird das Produkt der Elektrolyse - die Alkoholatlösung - verwässert. Daneben kann auch die Elektrolysezelle selbst undicht werden und auslaufen.

Die Aufgabe der vorliegenden Erfindung lag deshalb darin, eine Elektrolysezelle zur Verfügung zu stellen, die diese Nachteile nicht aufweist.

Ein weiterer Nachteil herkömmlicher Elektrolysezellen auf diesem technischen Gebiet ergibt sich daraus, dass der Festelektrolyt nicht gegenüber wässrigen Säuren langzeitstabil ist. Dies ist insofern problematisch, als während der Elektrolyse in der Anodenkammer der pH durch Oxidationsprozesse sinkt (zum Beispiel bei Herstellung von Halogenen durch Disproportionierung oder durch Sauerstoffbildung). Diese sauren Bedingungen greifen den NaSICON-Festelektrolyten an, so dass das Verfahren nicht großtechnisch eingesetzt werden kann. Um diesem Problem zu begegnen, wurden im Stand der Technik verschiedene Ansätze beschrieben.

So wurden im Stand der Technik Dreikammerzellen vorgeschlagen. Solche sind auf dem Gebiet der Elektrodialyse bekannt, zum Beispiel US 6,221,225 B1.

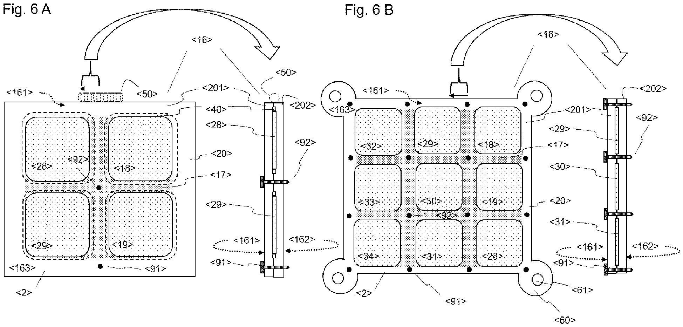

WO 2012/048032 A2 und US 2010/0044242 A1 beschreiben beispielsweise elektrochemische Verfahren zur Herstellung von Natriumhypochlorit und ähnlichen Chlorverbindungen in einer solchen Dreikammerzelle. Die Kathodenkammer und die mittlere Kammer der Zelle werden dabei durch einen für Kationen durchlässigen Festelektrolyten wie zum Beispiel NaSICON getrennt. Um diesen vor dem sauren Anolyten zu schützen, wird der Mittelkammer beispielsweise Lösung aus der Kathodenkammer zugeführt. Die US 2010/0044242 A1 beschreibt außerdem in Abbildung 6, dass Lösung aus der mittleren Kammer mit Lösung aus der Anodenkammer außerhalb der Kammer vermischt werden kann, um Natriumhypochlorit zu erhalten.

Auch für die Herstellung oder Reinigung von Alkalialkoholaten wurden solche Zellen im Stand der Technik vorgeschlagen.

So beschreibt die US 5,389,211 A ein Verfahren zur Reinigung von Alkoholatlösungen, in denen eine Dreikammerzelle eingesetzt wird, in welcher die Kammern durch kationenselektive Festelektrolyten oder auch nichtionische Trennwände voneinander abgegrenzt sind. Die Mittelkammer wird als Pufferkammer eingesetzt, um zu verhindern, dass sich die gereinigte Alkoxid- oder Hydroxidlösung aus der Kathodenkammer mit der verunreinigten Lösung aus der Anodenkammer mischt.

Die DE 42 33 191 A1 beschreibt die elektrolytische Gewinnung von Alkoholaten aus Salzen und Alkoholaten in Mehrkammerzellen und Stapeln aus mehreren Zellen.

Die WO 2008/076327 A1 beschreibt ein Verfahren zur Herstellung von Alkalimetallalkoholaten. Dabei wird eine Dreikammerzelle eingesetzt, deren Mittelkammer mit Akalimetallalkoholat gefüllt ist (siehe zum Beispiel Absätze [0008] und [0067] der WO 2008/076327 A1). Dadurch wird der die Mittelkammer und die Kathodenkammer abtrennende Festelektrolyt vor der in der Anodenkammer befindlichen Lösung, die bei der Elektrolyse saurer wird, geschützt. Eine ähnliche Anordnung beschreibt die WO 2009/073062 A1. Diese Anordnung hat allerdings den Nachteil, dass es sich bei der Alkalimetallalkoholatlösung, welche als Pufferlösung verbraucht und kontinuierlich kontaminiert wird, um das gewünschte Produkt handelt. Ein weiterer Nachteil des in der WO 2008/076327 A1 beschriebenen Verfahrens ist, dass die Bildung des Alkoholats in der Kathodenkammer von der Diffusionsgeschwindigkeit der Alkalimetallionen durch zwei Membranen bzw. Festelektrolyten abhängt. Dies führt wiederum zu einer Verlangsamung der Bildung des Alkoholats.

US 2010/181189 offenbart ein Gerüst für eine ionenleitfähige Membran.

Ein weiteres Problem ergibt sich durch die Geometrie der Dreikammerzelle. Die Mittelkammer ist in einer solchen Kammer durch eine Diffusionsbarriere von der Anodenkammer und durch eine ionenleitende Keramik von der Kathodenkammer abgetrennt. Während der Elektrolyse kommt es damit unvermeidlich zur Ausbildung von pH-Gradienten und zu Totvolumina. Dies kann die ionenleitende Keramik schädigen und infolgedessen den Spannungsbedarf der Elektrolyse erhöhen und/oder zum Bruch der Keramik führen.

Während dieser Effekt in der gesamten Elektrolysekammer stattfindet, ist der Abfall des pH-Wertes besonders kritisch in der Mittelkammer, da diese von der ionenleitenden Keramik begrenzt wird. An der Anode und der Kathode werden üblicherweise Gase gebildet, sodass es in diesen Kammern zumindest bis zu einem gewissen Grad zur Durchmischung kommt. Eine solche Durchmischung findet dagegen in der Mittelkammer nicht statt, so dass sich in ihr der pH-Gradient ausbildet. Dieser unerwünschte Effekt verstärkt sich dadurch, dass die Sole im Allgemeinen relativ langsam durch die Elektrolysezelle gepumpt wird.

Eine weitere Aufgabe der vorliegenden Erfindung war es deshalb, ein verbessertes Verfahren zur elektrolytischen Herstellung von Alkalimetallalkoholat wie auch eine insbesondere für ein solches Verfahren geeignete Elektrolysezelle zu Verfügung zu stellen. Diese sollen die vorgenannten Nachteile nicht aufweisen und insbesondere einen verbesserten Schutz des Festelektrolyten vor der Ausbildung des pH-Gradienten sowie einen gegenüber dem Stand der Technik sparsameren Einsatz der Edukte gewährleisten.

### 2. Kurzbeschreibung der Erfindung

Die erfindungsgemäße Aufgabe wird durch eine Trennwand **W** gemäß dem ersten Aspekt der Erfindung gelöst. Die Trennwand **W** <16> umfasst eine Seite **S_{KK}** <161 > mit der Oberfläche **O_{KK}** <163> und eine der Seite **S_{KK}** <161 > gegenüberliegende Seite **S_{A/MK}** <162> mit der Oberfläche **O_{A/MK}** <164>.

Die Trennwand **W** <16> umfasst außerdem ein Rahmenelement **R** <2> aus zwei einander gegenüberliegenden Teilen **R₁** <201> und **R₂** <202>, zwischen denen mindestens zwei alkalikationenleitende Festelektrolytkeramiken **F_{A}** <18> und **F_{B}** <19> angeordnet sind.

Dabei ist **R₁** <201> über die Oberfläche **O_{KK}** <163> direkt kontaktierbar, und **R₂** <202> ist über die Oberfläche **O_{A/MK}** <164> direkt kontaktierbar.

Das Rahmenelement **R** <2> bildet ein Randelement **R_{R}** <20> und ein Trennelement **R_{T}** <17> aus, wobei das Randelement **R_{R}** <20> die Oberflächen **O_{KK}** <163> und **O_{A/MK}** <164> begrenzt, bevorzugt vollständig umschließt,
und wobei das Trennelement **R_{T}** <17> zwischen den von der Trennwand **W** <16> umfassten alkalikationenleitende Festelektrolytkeramiken liegt und diese voneinander abtrennt, so dass die von der Trennwand **W** <16> umfassten alkalikationenleitenden Festelektrolytkeramiken sowohl über die Oberfläche **O_{KK}** <163> als auch über die Oberfläche **O_{A/MK}** <164> direkt kontaktierbar sind.

Die Trennwand **W** <16> ist dadurch gekennzeichnet, dass **R₁** <201> und **R₂** <202> durch mindestens ein Befestigungselement **B_{R}** <91> am Randelement **R_{R}** <20> aneinander befestigt sind,
und **R₁** <201> und **R₂** <202> durch mindestens ein Befestigungselement **B_{T}** <92> am Trennelement **R_{T}** <17> aneinander befestigt sind.

In einem zweiten Aspekt betrifft die vorliegende Erfindung eine Elektrolysezelle **E** <1>, umfassend
- mindestens eine Anodenkammer **K_{A}** <11> mit mindestens einem Zulauf **Z_{KA}** <110>, mindestens einem Ablauf **A_{KA}** <111> und einem Innenraum **I_{KA}** <112>, der eine anodische Elektrode **E_{A}** <113> umfasst,
- mindestens eine Kathodenkammer **K_{K}** <12> mit mindestens einem Zulauf **Z_{KK}** <120>, mindestens einem Ablauf **A_{KK}** <121> und einem Innenraum **I_{KK}** <122>, der eine kathodische Elektrode **E_{K}** <123> umfasst,
- und gegebenenfalls mindestens eine dazwischen liegende Mittelkammer **K_{M}** <13> mit mindestens einem Zulauf **Z_{KM}** <130>, mindestens einem Ablauf **A_{KM}** <131 > und einem Innenraum **I_{KM}** <132>,
   wobei dann **I_{KA}** <112> und **I_{KM}** <132> durch eine Diffusionsbarriere **D** <14> voneinander abgetrennt sind, und **A_{KM}** <131> durch eine Verbindung **V_{AM}** <15> mit dem Zulauf **Z_{KA}** <110> verbunden ist, so dass durch die Verbindung **V_{AM}** <15> Flüssigkeit aus **I_{KM}** <132> in **I_{KA}** <112> geleitet werden kann,
wobei
- in den Fällen, in denen die Elektrolysezelle **E** <1> keine Mittelkammer **K_{M}** <13> umfasst, **I_{KA}** <112> und **I_{KK}** <122> durch eine Trennwand **W** <16> gemäß dem ersten Aspekt der Erfindung voneinander abgetrennt sind,
- in den Fällen, in denen die Elektrolysezelle **E** <1> mindestens eine Mittelkammer **K_{M}** <13> umfasst, **I_{KA}** <112> und **I_{KM}** <132> durch eine Trennwand **W** <16> gemäß dem ersten Aspekt der Erfindung voneinander abgetrennt sind,
dadurch gekennzeichnet, dass
die von der Trennwand **W** <16> umfassten alkalikationenleitenden Festelektrolytkeramiken, und insbesondere auch das Trennelement **R_{T}** <17>, den Innenraum **I_{KK}** <122> auf der Seite **S_{KK}** <161> über die Oberfläche **O_{KK}** <163> direkt kontaktieren,
und
- in den Fällen, in denen die Elektrolysezelle **E** <1> keine Mittelkammer **K_{M}** <13> umfasst, die von der Trennwand **W** <16> umfassten alkalikationenleitenden Festelektrolytkeramiken, und insbesondere auch das Trennelement **R_{T}** <17>, den Innenraum **I_{KA}** <112> auf der Seite **S_{A/MK}** <162> über die Oberfläche **O_{A/MK}** <164> direkt kontaktieren,
- in den Fällen, in denen die Elektrolysezelle **E** <1> mindestens eine Mittelkammer **K_{M}** <13> umfasst, die von der Trennwand **W** <16> umfassten alkalikationenleitenden Festelektrolytkeramiken, und insbesondere auch das Trennelement **R_{T}** <17>, den Innenraum **I_{KM}** <132> auf der Seite **S_{A/MK}** <162> über die Oberfläche **O_{A/MK}** <164> direkt kontaktieren.

In einem dritten Aspekt betrifft die vorliegende Erfindung ein Verfahren zur Herstellung einer Lösung **L₁** eines Alkalimetallalkoholats XOR im Alkohol ROH, wobei X ein Alkalimetallkation ist und R ein Alkylrest mit 1 bis 4 Kohlenstoffatomen ist,
(α) wobei in einer Elektrolysezelle **E** gemäß dem zweiten Aspekt der Erfindung, die keine Mittelkammer **K_{M}** umfasst, die folgenden, gleichzeitig ablaufenden Schritte (α1), (α2), (α3) durchgeführt werden:
   (α1) eine Lösung **L₂** umfassend den Alkohol ROH wird durch **K_{K}** geleitet,
   (α2) eine neutrale oder alkalische, wässrige Lösung **L₃** eines Salzes **S** umfassend X als Kation wird durch **K_{A}** geleitet,
   (α3) zwischen **E_{A}** und **E_{K}** wird Spannung angelegt,
   oder
(β) wobei in einer Elektrolysezelle **E** gemäß dem zweiten Aspekt der Erfindung, die eine Mittelkammer **K_{M}** umfasst, die folgenden, gleichzeitig ablaufenden Schritte (β1), (β2), (β3) durchgeführt werden:
   (β1) eine Lösung **L₂** umfassend den Alkohol ROH wird durch **K_{K}** geleitet,
   (β2) eine neutrale oder alkalische, wässrige Lösung **L₃** eines Salzes **S** umfassend X als Kation wird durch **K_{M}**, dann über **V_{AM}**, dann durch **K_{A}** geleitet,
   (β3) zwischen **E_{A}** und **E_{K}** wird Spannung angelegt,
   wodurch am Ablauf **A_{KK}** die Lösung **L₁** erhalten wird, wobei die Konzentration von XOR in **L₁** höher ist als in **L₂**,
und wodurch am Ablauf **A_{KA}** eine wässrige Lösung **L₄** von **S** erhalten wird, wobei die Konzentration von **S** in **L₄** geringer ist als in **L₃.**

### 3. Abbildungen

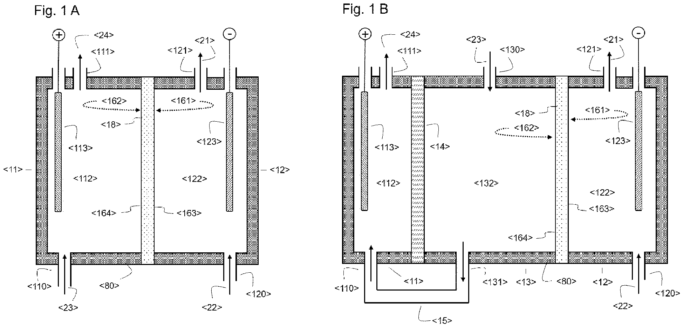

### 3.1 Abbildungen 1 A und 1 B

Abbildung 1 A (= "Fig. 1 A") zeigt eine nicht erfindungsgemäße Elektrolysezelle E. Diese umfasst eine Kathodenkammer **K_{K}** <12> und eine Anodenkammer **K_{A}** <11>.

Die Kathodenkammer **K_{K}** <12> umfasst eine kathodische Elektrode **E_{K}** <123> im Innenraum **I_{KK}** <122>, einen Zulauf **Z_{KK}** <120> und einen Ablauf **A_{KK}** <121 >.

Die Anodenkammer **K_{A}** <11> umfasst eine anodische Elektrode **E_{A}** <113> im Innenraum **I_{KA}** <112>, einen Zulauf **Z_{KK}** <110> und einen Ablauf **A_{KA}** <111>.

Die beiden Kammern werden von einer Außenwand <80> der Zweikammerzelle **E** begrenzt. Der Innenraum **I_{KK}** <122> ist außerdem durch eine Trennwand, die aus einer Scheibe eines für Natriumionen selektiv permeablen NaSICON-Festelektrolyten **F_{A}** <18> besteht, vom Innenraum **I_{KA}** <112> abgetrennt. Der NaSICON-Festelektrolyt **F_{A}** <18> erstreckt sich über die gesamte Tiefe und Höhe der Zweikammerzelle **E.** Die Trennwand weist zwei Seiten **S_{KK}** <161> und **S_{A/MK}** <162> auf, deren Oberflächen **O_{KK}** <163> und **O_{A/MK}** <164> den jeweiligen Innenraum **I_{KK}** <122> bzw. **I_{KA}** <112> kontaktieren.

Eine wässrige Lösung von Natriumchlorid **L₃** <23> mit pH 10.5 wird über den Zulauf **Z_{KA}** <110> entgegen der Schwerkraft in den Innenraum **I_{KA}** <112> gegeben.

Über den Zulauf **Z_{KK}** <120> wird eine Lösung von Natriummethanolat in Methanol **L₂** <22> in den Innenraum **I_{KK}** <122> geleitet.

Es wird dabei eine Spannung zwischen der kathodischen Elektrode **E_{K}** <123> und der anodischen Elektrode **E_{A}** <113> angelegt. Dadurch wird im Innenraum **I_{KK}** <122> Methanol im Elektrolyten **L₂** <22> zu Methanolat und H₂ reduziert (CH₃OH + e⁻ → CH₃O⁻ + ½ H₂). Natriumionen diffundieren dabei vom Innenraum **I_{KA}** <112> durch den NaSICON-Festelektrolyten **F_{A}** <18> in den Innenraum **I_{KK}** <122>. Insgesamt erhöht sich dadurch die Konzentration von Natriummethanolat im Innenraum **I_{KK}** <122>, wodurch eine methanolische Lösung von Natriummethanolat **L₁** <21> erhalten wird, deren Konzentration an Natriummethanolat gegenüber **L₂** <22> erhöht ist.

Im Innenraum **I_{KA}** <112> findet die Oxidation von Chloridionen zu molekularem Chlor statt (Cl⁻ → ½ Cl₂ + e). Am Ablauf **A_{KA}** <111 > wird eine wässrige Lösung **L₄** <24> erhalten, in der der Gehalt an NaCl gegenüber **L₃** <23> verringert ist. Chlorgas Clz bildet in Wasser gemäß der Reaktion Clz + H₂O → HOCl + HCl hypochlorige Säure und Salzsäure, welche mit weiteren Wassermolekülen sauer reagieren. Die Acidität schädigt den NaSICON-Festelektrolyten **F_{A}** <18>.

Abbildung 1 B (= "Fig. 1 B") zeigt eine weitere nicht erfindungsgemäße Elektrolysezelle **E.** Diese Dreikammerzelle **E** umfasst eine Kathodenkammer **K_{K}** <12>, eine Anodenkammer **K_{A}** <11> und eine dazwischen liegende Mittelkammer **K_{M}** <13>.

Die Kathodenkammer **K_{K}** <12> umfasst eine kathodische Elektrode **E_{K}** <123> im Innenraum **I_{KK}** <122>, einen Zulauf **Z_{KK}** <120> und einen Ablauf **A_{KK}** <121 >.

Die Anodenkammer **K_{A}** <11> umfasst eine anodische Elektrode **E_{A}** <113> im Innenraum **I_{KA}** <112>, einen Zulauf **Z_{KK}** <110> und einen Ablauf **A_{KA}** <111>.

Die Mittelkammer **K_{M}** <13> umfasst einen Innenraum **I_{KM}** <132>, einen Zulauf **Z_{KM}** <130> und einen Ablauf **A_{KM}** <131 >.

Der Innenraum **I_{KA}** <112> ist mit dem Innenraum **I_{KM}** <132> über die Verbindung **V_{AM}** <15> verbunden.

Die drei Kammern werden von einer Außenwand <80> der Dreikammerzelle **E** begrenzt. Der Innenraum **I_{KM}** <132> der Mittelkammer **K_{M}** <13> ist außerdem durch eine Trennwand, die aus einer Scheibe eines für Natriumionen selektiv permeablen NaSICON-Festelektrolyten **F_{A}** <18> besteht, vom Innenraum **I_{KK}** <122> der Kathodenkammer **K_{K}** <12> abgetrennt. Der NaSICON-Festelektrolyt **F_{A}** <18> erstreckt sich über die gesamte Tiefe und Höhe der Dreikammerzelle **E.** Die Trennwand weist zwei Seiten **S_{KK}** <161 > und **S_{A/MK}** <162> auf, deren Oberflächen **O_{KK}** <163> und **O_{A/MK}** <164> den jeweiligen Innenraum **I_{KK}** <122> bzw. **I_{KM}** <132> kontaktieren.

Der Innenraum **I_{KM}** <132> der Mittelkammer **K_{M}** <13> ist zusätzlich wiederum durch eine Diffusionsbarriere **D** <14> vom Innenraum **I_{KA}** <112> der Anodenkammer **K_{A}** <11> abgetrennt. Der NaSICON-Festelektrolyt **F_{A}** <18> und die Diffusionsbarriere **D** <14> erstrecken sich über die gesamte Tiefe und Höhe der Dreikammerzelle **E.** Die Diffusionsbarriere **D** <14> ist eine Kationenaustauschermembran (sulfoniertes PTFE).

In der Ausführungsform gemäß Abbildung 1 B wird die Verbindung **V_{AM}** <15> außerhalb der Elektrolysezelle **E** ausgebildet, insbesondere durch ein Rohr oder Schlauch, dessen Material aus Gummi, Metall oder Kunststoff ausgewählt sein kann. Durch die Verbindung **V_{AM}** <15> kann Flüssigkeit aus dem Innenraum **I_{KM}** <132> der Mittelkammer **K_{M}** <13> in den Innenraum **I_{KA}** <112> der Anodenkammer **K_{A}** <11> außerhalb der Außenwand **W_{A}** <80> der Dreikammerzelle **E** geleitet werden. Die Verbindung **V_{AM}** <18> verbindet einen Ablauf **A_{KM}** <131>, der am Boden der Mittelkammer **K_{M}** <13> die Außenwand **W_{A}** <80> der Elektrolysezelle **E** durchbricht, mit einem Zulauf **Z_{KA}** <110>, der am Boden der Anodenkammer **K_{A}** <11> die Außenwand **W_{A}** <80> der Elektrolysezelle **E** durchbricht.

Eine wässrige Lösung von Natriumchlorid **L₃** <23> mit pH 10.5 wird über den Zulauf **Z_{KM}** <130> gleichgerichtet mit der Schwerkraft in den Innenraum **I_{KM}** <132> der Mittelkammer **K_{M}** <13> gegeben. Durch die Verbindung **V_{AM}** <15>, die zwischen einem Ablauf **A_{KM}** <131> der Mittelkammer **K_{M}** <13> und einem Zulauf **Z_{KA}** <110> der Anodenkammer **K_{A}** <11> ausgebildet ist, ist der Innenraum **I_{KM}** <132> der Mittelkammer **K_{M}** <13> mit dem Innenraum **I_{KA}** <112> der Anodenkammer **K_{A}** <11> verbunden. Natriumchloridlösung **L₃** <23> wird durch diese Verbindung **V_{AM}** <15> vom Innenraum **I_{KM}** <132> in den Innenraum **I_{KM}** <112> geleitet.

Über den Zulauf **Z_{KK}** <120> wird eine Lösung von Natriummethanolat in Methanol **L₂** <22> in den Innenraum **I_{KK}** <122> geleitet.

Es wird dabei eine Spannung zwischen der kathodischen Elektrode **E_{K}** <123> und der anodischen Elektrode **E_{A}** <113> angelegt. Dadurch wird im Innenraum **I_{KK}** <122> Methanol im Elektrolyten **L₂** <22> zu Methanolat und H₂ reduziert (CH₃OH + e⁻ → CH₃O⁻ + ½ H₂). Natriumionen diffundieren dabei vom Innenraum **I_{KM}** <132> der Mittelkammer **K_{M}** <103> durch den NaSICON-Festelektrolyten **F_{A}** <18> in den Innenraum **I_{KK}** <122>. Insgesamt erhöht sich dadurch die Konzentration von Natriummethanolat im Innenraum **I_{KK}** <122>, wodurch eine methanolische Lösung von Natriummethanolat **L₁** <21> erhalten wird, deren Konzentration an Natriummethanolat gegenüber **L₂** <22> erhöht ist.

Im Innenraum **I_{KA}** <112> findet die Oxidation von Chloridionen zu molekularem Chlor statt (Cl⁻ → ½ Cl₂ + e⁻). Am Ablauf **A_{KA}** <111 > wird eine wässrige Lösung **L₄** <24> erhalten, in der der Gehalt an NaCl gegenüber **L₃** <23> verringert ist. Chlorgas Cl₂ bildet in Wasser gemäß der Reaktion Cl₂ + H₂O → HOCl + HCl hypochlorige Säure und Salzsäure, welche mit weiteren Wassermolekülen sauer reagieren. Die Acidität würde den NaSICON-Festelektrolyten **F_{A}** <18> schädigen, wird aber durch die Anordnung in der Dreikammerzelle auf die Anodenkammer **K_{A}** <11> begrenzt und somit in der Elektrolysezelle **E** vom NaSICON-Festelektrolyten **F_{A}** <18> ferngehalten. Dadurch erhöht sich dessen Lebensdauer beträchtlich.

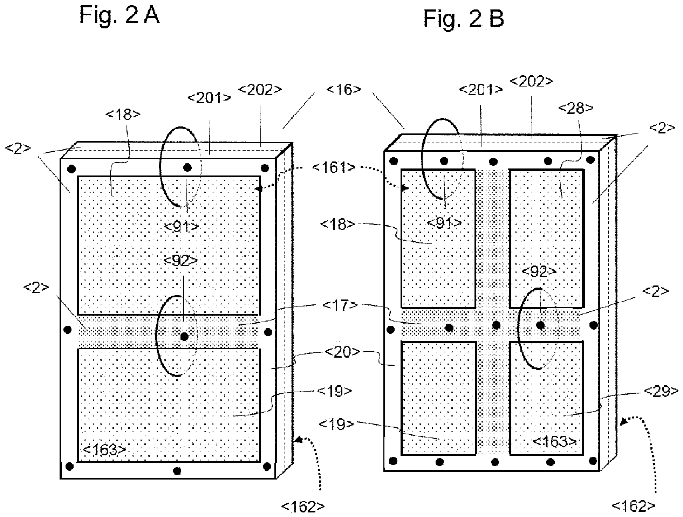

### 3.2 Abbildungen 2 A und 2 B

Abbildung 2 A (= "Fig. 2 A") zeigt eine erfindungsgemäße Trennwand **W** <16>. Die Seite **S_{KK}** <161> mit der Oberfläche **O_{KK}** <163> liegt in der Bildebene, die Seite **S_{A/MK}** <162> mit der nicht in Fig. 2 A sichtbaren Oberfläche **O_{A/MK}** <164> hinter der Bildebene.

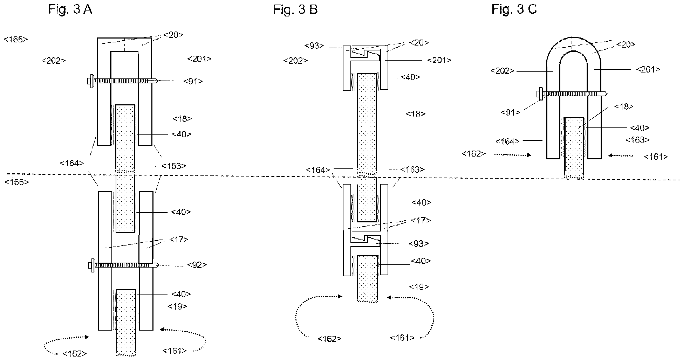

Die Trennwand **W** <16> umfasst zwei NaSICON-Festelektrolytkeramiken **F_{A}** <18> und **F_{B}** <19>, die zwischen einem Rahmenelement **R** <2> angeordnet sind. Das Rahmenelement **R** <2> umfasst zwei Teile **R₁** <201> und **R₂** <202>, zwischen denen die Keramiken **F_{A}** <18> und **F_{B}** <19> angeordnet sind. Das Rahmenelement **R** <2> bildet dabei ein Randelement **R_{R}** <20> und ein Trennelement **R_{T}** <17> aus. Das Trennelement **R_{T}** <17> liegt zwischen den NaSICON-Festelektrolytkeramiken **F_{A}** <18> und **F_{B}** <19> und trennt diese voneinander ab. Das Trennelement **R_{T}** <17> ist der in den Abbildungen 2 A und 2 B schraffiert dargestellte Teil des Rahmenelements **R** <2>. Das Randelement **R_{R}** <20> ist der in den Abbildungen 2 A und 2 B nicht schraffiert dargestellte Teil des Rahmenelements **R** <2>. Die beiden Rahmenteile **R₁** <201> und **R₂** <202> sind im Bereich des Randelements **R_{R}** <20> durch acht Befestigungselemente **B_{R}** <91> aneinander befestigt, und im Bereich des Trennelements **R_{T}** <17> durch ein Befestigungselement **B_{T}** <92> aneinander befestigt. Die eingezeichneten Skizzen zeigen Querschnitte **Q_{RR}** <165> und **Q_{RT}** <166> durch die Trennwand **W** <16> an, die in den Abbildungen 3 A bis 3 C näher erläutert sind. **Q_{RR}** <165> und **Q_{RT}** <166> durchschneiden die Trennwand **W** <16> im rechten Winkel zur Oberfläche **O_{KK}** <163> im Bereich einer der beiden Festelektrolytkeramiken **F_{A}** <18> und **F_{B}** <19>.

Abbildung 2 B (= Fig. 2 B) zeigt eine andere Ausführungsform einer erfindungsgemäßen Trennwand **W** <16>. Diese entspricht der in Abbildung 2 dargestellten Ausführungsformen mit dem Unterschied, dass sie vier NaSICON-Festelektrolytkeramiken **F_{A}** <18>, **F_{B}** <19>, **F_{C}** <28>, **F_{D}** <29> umfasst, wobei **F_{A}** <18>, **F_{B}** <19>, **F_{C}** <28> und **F_{D}** <29> zwischen den Rahmenteilen **R₁** <201> und **R₂** <202> angeordnet sind. Das Trennelement **R_{T}** <17> weist die Form eines Kreuzes auf. Die beiden Rahmenteile **R₁** <201> und **R₂** <202> sind im Bereich des Randelements **R_{R}** <20> durch zwölf Befestigungselemente **B_{R}** <91> aneinander befestigt, und im Bereich des Trennelements **R_{T}** <17> durch drei Befestigungselement **B_{T}** <92>.

Die Seite **S_{KK}** <161> mit der Oberfläche **O_{KK}** <163> liegt in der Bildebene, die Seite **S_{A/MK}** <162> mit der nicht in Fig. 2 B sichtbaren Oberfläche **O_{A/MK}** <164> hinter der Bildebene.

### 3.3 Abbildungen 3 A bis 3 C

Die Abbildungen 3 A bis 3 C zeigen jeweils oberhalb der durchgehenden gestrichelten Linie eine Detailansicht des in den Abbildungen 2 A und 2 B dargestellten Querschnitts **Q_{RR}** <165> im Bereich des Randelements **R_{R}** <20> der Trennwand **W** <16>. Die Abbildungen 3 A und 3 B zeigen außerdem unterhalb der durchgehenden gestrichelten Linie eine Detailansicht des in den Abbildungen 2 A und 2 B dargestellten Querschnitts **Q_{RT}** <166> im Bereich des Trennelements **R_{T}** <17> der Trennwand **W** <16>. Die Seite **S_{KK}** <161 > mit der Oberfläche **O_{KK}** <163> liegt auf der rechten Seite der Abbildung 3 A, die Seite **S_{A/MK}** <162> mit der Oberfläche **O_{A/MK}** <164> liegt auf der linken Seite der Abbildung 3 A.

In Abbildung 3 A (= "Fig. 3 A") ist die Festelektrolytkeramik **F_{A}** <18> im Querschnitt **Q_{RR}** <165> zwischen den beiden Rahmenteilen **R₁** <201> und **R₂** <202> angeordnet, die hier das Randelement **R_{R}** <20> ausbilden. Diese können in einem Stück oder getrennt voneinander vorliegen, wie durch die gestrichelte Linie angedeutet. Bevorzugt liegen sie getrennt vor. Sie werden von einer Schraube als Befestigungselement **B_{R}** <91> aneinander befestigt und klemmen die Festelektrolytkeramik **F_{A}** <18> zwischen sich ein. Zwischen den beiden Rahmenteilen **R₁** <201> und **R₂** <202> und der Festelektrolytkeramik **F_{A}** <18> wird bevorzugt eine Dichtung **Di** <40> angebracht.

Im Querschnitt **Q_{RT}** <166> sind die beiden Festelektrolytkeramiken **F_{A}** <18> und **F_{B}** <19> zwischen den beiden Rahmenteilen **R₁** <201> und **R₂** <202> angeordnet, die hier das Trennelement **R_{T}** <17> ausbilden. Sie werden von einer Schraube als Befestigungselement **B_{T}** <92> aneinander befestigt und klemmen die Festelektrolytkeramiken **F_{A}** <18> und **F_{B}** <19> zwischen sich ein, wobei bevorzugt eine Dichtung **Di** <40> angebracht wird.

Abbildung 3 B (= "Fig. 3 B") illustriert jeweils eine weitere Ausführungsform der beiden Querschnitte **Q_{RR}** <165> und **Q_{RT}** <166>. Diese entspricht der in Abbildung 3 A gezeigten Ausführungsform mit dem Unterschied, dass die beiden Befestigungselemente **B_{R}** <91> und **B_{T}** <92> durch Haken **B_{H}** <93> ausgebildet sind. Diese Haken können einstückig (wie hier gezeigt) mit dem jeweiligen Rahmenteil **R₁** <201> bzw. **R₂** <202> ausgebildet sein oder an diese angeklebt werden. Sie greifen ineinander und ermöglichen es s, die beiden Rahmenteile **R₁** <201> und **R₂** <202> aneinander zu befestigen.

Abbildung 3 C (= "Fig. 3 C") illustriert eine weitere Ausführungsform des Querschnitts **Q_{RR}** <165>. Dieser entspricht der in Abbildung 3 A gezeigten Ausführungsform mit dem Unterschied, dass das Randelement **R_{R}** <20> abgerundete Ecken ausbildet.

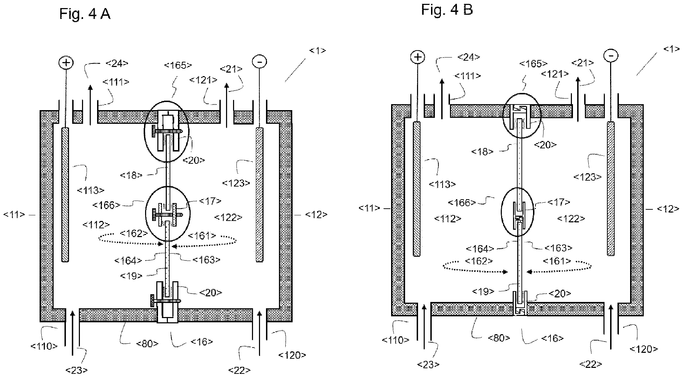

### 3.4 Abbildungen 4 A und 4 B

Die Abbildungen 4 A (= "Fig. 4 A") und 4 B (= "Fig. B A") zeigen jeweils eine Elektrolysezelle **E** <1> gemäß dem zweiten Aspekt der Erfindung. Diese entsprechen jeweils der in Abbildung 1 A dargestellten Elektrolysezelle mit dem Unterschied, dass eine Trennwand **W** <16> den Innenraum **I_{KK}** <122> der Kathodenkammer **K_{K}** <12> vom Innenraum **I_{KA}** <112> der Anodenkammer **K_{A}** <11> abtrennt. Die Trennwand ist jene, die in Abbildungen 2 A oder 2 B dargestellt ist.

Dabei wird in der Ausführungsform gemäß Abbildung 4 A eine Schraube als Befestigungselemente **B_{R}** <91> und **B_{T}** <92> eingesetzt. Der Querschnitt **Q_{RR}** <165> im Bereich des Randelements **R_{R}** <20> der Trennwand **W** <16> und der Querschnitt **Q_{RT}** <166> im Bereich des Trennelements **R_{T}** <17> der Trennwand **W** <16> ist jeweils wie in Abbildung 3 A beschrieben.

In der Ausführungsform gemäß Abbildung 4 B werden ineinandergreifende Haken als Befestigungselemente **B_{R}** <91> und **B_{T}** <92> eingesetzt. Der Querschnitt **Q_{RR}** <165> im Bereich des Randelements **R_{R}** <20> der Trennwand **W** <16> und der Querschnitt **Q_{RT}** <166> im Bereich des Trennelements **R_{T}** <17> der Trennwand **W** <16> ist jeweils wie in Abbildung 3 B beschrieben.

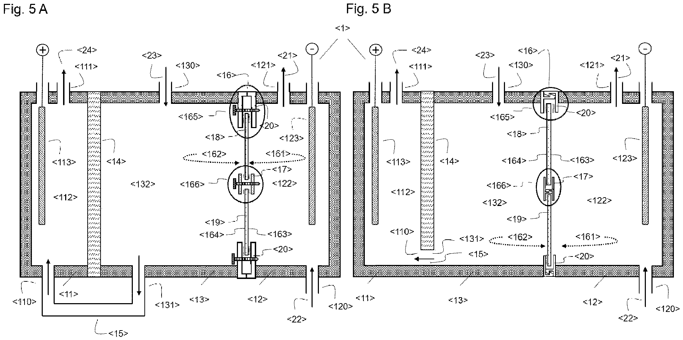

### 3.5 Abbildungen 5 A und 5 B

Abbildung 5 A (= "Fig. 5 A") zeigt eine Elektrolysezelle **E** <1> gemäß dem zweiten Aspekt der Erfindung. Diese entspricht der in Abbildung 1 B dargestellten Elektrolysezelle mit dem Unterschied, dass eine Trennwand **W** <16> den Innenraum **I_{KK}** <122> der Kathodenkammer **K_{K}** <12> vom Innenraum **I_{KM}** <132> der Mittelkammer **K_{M}** <13> abtrennt. Die Trennwand **W** <16> ist jene, die in Abbildungen 2 A oder 2 B dargestellt ist. Dabei wird in der Ausführungsform gemäß Abbildung 4 A eine Schraube als Befestigungselemente **B_{R}** <91> und **B_{T}** <92> eingesetzt. Der Querschnitt **Q_{RR}** <165> im Bereich des Randelements **R_{R}** <20> der Trennwand **W** <16> und der Querschnitt **Q_{RT}** <166> im Bereich des Trennelements **R_{T}** <17> der Trennwand **W** <16> ist jeweils wie in Abbildung 3 A beschrieben.

Abbildung 5 B (= "Fig. 6 B") zeigt eine Elektrolysezelle **E** <1> gemäß dem zweiten Aspekt der Erfindung. Diese entspricht der in Abbildung 5 A dargestellten Elektrolysezelle **E** <1> mit den folgenden beiden Unterschieden:
1. Die Verbindung **V_{AM}** <15> vom Innenraum **I_{KM}** <132> der Mittelkammer **K_{M}** <13> zum Innenraum **I_{KA}** <112> der Anodenkammer **K_{A}** <11> wird nicht außerhalb, sondern durch eine Perforation in der Diffusionsbarriere **D** <14> innerhalb der Elektrolysezelle **E** <1> gebildet. Diese Perforation kann in die Diffusionsbarriere **D** <14> gegeben werden oder schon bei der Herstellung der Diffusionsbarriere **D** <14> von Vorneherein in dieser vorliegen (z.B. bei textilen Geweben wie Filtertüchern oder Metallgeweben).
2. In der Ausführungsform gemäß Abbildung 5 B werden ineinandergreifende Haken als Befestigungselemente **B_{R}** <91> und **B_{T}** <92> eingesetzt. Der Querschnitt **Q_{RR}** <165> im Bereich des Randelements **R_{R}** <20> der Trennwand **W** <16> und der Querschnitt **Q_{RT}** <166> im Bereich des Trennelements **R_{T}** <17> der Trennwand **W** <16> ist jeweils wie in Abbildung 3 B beschrieben.

Das Trennelement **R_{T}** <17> ist der in den Abbildungen 6 A und 6 B schraffiert dargestellte Teil des Rahmenelements **R** <2>.

### 3.6 Abbildungen 6 A und 6 B

Abbildung 6 A (= "Fig. 6 A") zeigt eine weitere Ausführungsform einer erfindungsgemäßen Trennwand **W** <16> in Aufsicht auf die Seite **S_{KK}** <161> mit der Oberfläche **O_{KK}** <163> (links) und das dann als Seitansicht des Ausschnitts, der sich durch die geschwungene Klammer in Blickrichtung des Pfeiles ergibt.

Diese umfasst vier NaSICON-Festelektrolytkeramiken **F_{A}** <18>, **F_{B}** <19>, **F_{C}** <28> und **F_{D}** <29>, die zwischen zwei Hälften **R₁** <201> und **R₂** <202> eines Rahmenelements **R** <2> angeordnet sind. Das Rahmenelement **R** <2> bildet dabei ein Randelement **R_{R}** <20> und ein Trennelement **R_{T}** <17> aus. Das Trennelement **R_{T}** <17> ist kreuzförmig und liegt zwischen den NaSICON-Festelektrolytkeramiken **F_{A}** <18>, **F_{B}** <19>, **F_{C}** <28> und **F_{D}** <29> und trennt diese voneinander ab. Das Trennelement **R_{T}** <17> ist der in den Abbildungen 6 A und 6 B schraffiert dargestellte Teil des Rahmenelements **R** <2>. Das Randelement **R_{R}** <20> ist der in den Abbildungen 6 A und 6 B nicht schraffiert dargestellte Teil des Rahmenelements **R** <2>. Die beiden Rahmenteile **R₁** <201> und **R₂** <202> sind im Bereich des Randelements **R_{R}** <20> durch ein Befestigungselement **B_{R}** <91> aneinander befestigt, und im Bereich des Trennelements **R_{T}** <17> durch ein Befestigungselement **B_{T}** <92> aneinander befestigt. Sie können optional über ein Scharnier <50> miteinander verbunden werden. Zwischen der jeweiligen Festelektrolytkeramik **F_{A}** <18>, **F_{B}** <19>, **F_{C}** <28> und **F_{D}** <29> und den beiden Rahmenteilen **R₁** <201> und **R₂** <202> wird jeweils bevorzugt ein Gummiring als Dichtung **Di** <40> angebracht. Die als Dichtung **Di** <40> fungierenden Ringe sind in der Frontalansicht auf der linken Seite von Abbildung 6 A mit gestrichelten Umrissen angegeben.

Abbildung 6 B (= "Fig. 6 B") zeigt eine weitere Ausführungsform einer erfindungsgemäßen Trennwand **W** <16>. Diese entspricht der in Abbildung 6 A beschriebenen Ausführungsform, bis darauf dass sie neun NaSICON-Festelektrolytkeramiken **F_{A}** <18>, **F_{B}** <19>, **F_{C}** <28>, **F_{D}** <29>, **F_{E}** <30>, **F_{F}** <31>, **F_{G}** <32>, **F_{H}** <33>, **F_{I}** <34> umfasst. Daneben weist das Rahmenelement **R** <2> zusätzlich vier Auswölbungen <60> mit jeweils einem Loch <61 > auf ("Hasenohren"), mit denen die Trennwand zum Beispiel an einer Kathodenkammer **K_{K}** <12> mit entsprechenden Ausbildungen befestigt werden kann.

### 4. Detaillierte Beschreibung der Erfindung

### 4.1 Trennwand W

Die vorliegende Erfindung betrifft in einem ersten Aspekt eine Trennwand **W.** Diese eignet sich insbesondere als Trennwand in einer Elektrolysezelle, insbesondere einer Elektrolysezelle **E.**

In einem Aspekt betrifft die vorliegende Erfindung somit auch eine Elektrolysezelle umfassend die Trennwand **W,** insbesondere eine Elektrolysezelle **E** umfassend die Trennwand **W.**

Die Trennwand **W** umfasst mindestens zwei, durch ein Trennelement **R_{T}** voneinander getrennte, alkalikationenleitende Festelektrolytkeramiken ("alkalikationenleitende Festelektrolytkeramik" wird im Folgenden durch "AFK" abgekürzt) **F_{A}** und **F_{B}**.

Die Trennwand **W** umfasst zwei Seiten **S_{KK}** und **S_{A/MK}**, die einander gegenüberliegen, das heißt, die Seite **S_{A/MK}** liegt der Seite **S_{KK}** gegenüber (und umgekehrt). Die beiden Seiten **S_{KK}** und **S_{A/MK}** umfassen insbesondere im Wesentlichen zueinander parallele Ebenen.

Die Geometrie der Trennwand **W** ist ansonsten nicht weiter beschränkt und kann insbesondere an den Querschnitt der Elektrolysezelle **E** angepasst werden, in der sie zum Einsatz kommt. Beispielsweise kann sie die Geometrie eines Quaders aufweisen und somit einen rechteckigen Durchschnitt aufweisen, oder die Geometrie eines stumpfen Kegels oder Zylinders und demnach einen kreisförmigen Durchschnitt aufweisen.

Optional kann die Trennwand **W** auch die Geometrie eines Quaders mit abgerundeten Ecken und/oder Auswölbungen aufweisen, die wiederum Löcher aufweisen können. Die Trennwand **W** hat dann Auswölbungen ("Hasenohren"), mit denen die Trennwand **W** an Elektrolysezellen fixiert werden kann oder auch die beiden Rahmenteile **R₁** und **R₂** der Trennwand **W** aneinander fixiert werden können.

Die Seite **S_{KK}** der Trennwand **W** weist die Oberfläche **O_{KK}** auf, und die Seite **S_{A/MK}** der Trennwand **W** weist die Oberfläche **O_{A/MK}** auf.

Die Trennwand **W** umfasst ein Rahmenelement **R.** Dieses umfasst zwei einander gegenüberliegenden Teile, bevorzugt Hälften, **R₁** und **R₂**, zwischen denen mindestens zwei alkalikationenleitende Festelektrolytkeramiken **F_{A}** und **F_{B}** angeordnet sind. **R₁** ist über die Oberfläche **O_{KK}** direkt kontaktierbar, **R₂** ist über die Oberfläche **O_{A/MK}** direkt kontaktierbar.

Das Rahmenelement **R** bildet ein Randelement **R_{R}** und ein Trennelement **R_{T}** aus, wobei das Randelement **R_{R}** die Oberflächen **O_{KK}** und **O_{A/MK}** begrenzt und bevorzugt vollständig umschließt, und wobei das Trennelement **R_{T}** zwischen den von der Trennwand **W** umfassten alkalikationenleitende Festelektrolytkeramiken liegt und diese voneinander abtrennt, so dass die von der Trennwand **W** umfassten alkalikationenleitenden Festelektrolytkeramiken sowohl über die Oberfläche **O_{KK}** als auch über die Oberfläche **O_{A/MK}** direkt kontaktierbar sind,

Das Merkmal "Trennwand" bedeutet, dass die Trennwand **W** flüssigkeitsdicht ist. Dies bedeutet, dass die AFKs und das Rahmenelement **R** lückenlos aneinander anschließen. Somit existieren keine Lücken zwischen Rahmenelement **R** und den von der Trennwand **W** umfassten AFKs, durch welche wässrige Lösung, alkoholische Lösung, Alkohol oder Wasser von der Seite **S_{KK}** auf die Seite **S_{A/MK}** oder umgekehrt fließen könnte.

Gibt es zwei oder mehr Paare gegenüberliegender Seiten, über deren Oberflächen die von der Trennwand **W** umfassten alkalikationenleitenden Festelektrolytkeramiken und das jeweilige Teil **R₁** bzw. **R₂** direkt kontaktierbar sind, dann wird bevorzugt jenes Paar gegenüberliegender Seiten als **S_{KK}** und **S_{A/MK}** im Sinne der Erfindung bezeichnet, welches die größten Oberflächen **O_{KK}** und **O_{A/MK}** umfasst. Sind die von zwei Paaren gegenüberliegender Seiten umfassten Oberflächen gleich groß, kann vom Fachmann ein Paar als **S_{KK}** und **S_{A/MK}** mit Oberflächen **O_{KK}** bzw. **O_{A/MK}** ausgewählt werden.

Unter Trennwänden **W,** bei denen es zwei oder mehr Paare gegenüberliegender Seiten gibt, über deren Oberflächen die von der Trennwand **W** umfassten alkalikationenleitenden Festelektrolytkeramiken und das jeweilige Teil **R₁** bzw. **R₂** direkt kontaktierbar sind, sind die Trennwände **W** bevorzugt, bei denen die vom jeweiligen Paar gegenüberliegender Seiten umfassten Oberflächen unterschiedlich groß sind, wobei dann das Paar gegenüberliegender Seiten als **S_{KK}** und **S_{A/MK}** im Sinne der Erfindung bezeichnet wird, welche die größten Oberflächen **O_{KK}** und **O_{A/MK}** umfasst.

Die Trennwand **W** gemäß dem ersten Aspekt der vorliegenden Erfindung umfasst auch Ausführungsformen, in denen die Trennwand **W** mehr als zwei AFKs, z.B. vier oder neun oder zwölf AFKs, umfasst.

In der Trennwand **W** werden alle von der Trennwand **W** umfassten AFKs durch das Trennelement **R_{T}** des Rahmenelements **R** voneinander abgetrennt, das heißt dass kein AFK direkt, also ohne dass ein Rahmenelement **R** dazwischen wäre, an ein anderes AFK grenzt.

Die Trennwand **W** ist weiterhin dadurch gekennzeichnet, dass die von der Trennwand **W** umfassten AFKs sowohl über die Oberfläche **O_{KK}** als auch über die Oberfläche **O_{A/MK}** direkt kontaktierbar sind.

"Direkt kontaktierbar" bedeutet mit Bezug auf die von der Trennwand **W** umfassten AFKs, dass ein Teil der Oberflächen **O_{KK}** und **O_{A/MK}** durch die Oberfläche der von der Trennwand **W** umfassten AFKs gebildet wird, das heißt, dass die von der Trennwand **W** umfassten AFKs an den beiden Oberflächen **O_{KK}** und **O_{A/MK}** unmittelbar zugänglich sind, so dass sie an den beiden Oberflächen **O_{KK}** und **O_{A/MK}** zum Beispiel mit wässriger Lösung, alkoholischer Lösung, Alkohol oder Wasser benetzt werden können.

Für die Anordnung der AFKs in der Trennwand **W** bedeutet dies, dass es für jeden von der Trennwand **W** umfassten AFK einen Weg von der Oberfläche **O_{KK}** auf der Seite **S_{KK}** auf die Oberfläche **O_{A/MK}** auf der Seite **S_{A/MK}** gibt, der vollständig durch die jeweilige AFK führt.

Die beiden Rahmenteile **R₁** und **R₂** sind über die Oberflächen **O_{KK}** bzw. **O_{A/MK}** direkt kontaktierbar.

"Direkt kontaktierbar" bedeutet mit Bezug auf das von der Trennwand **W** umfasste Rahmenteil **R₁,** dass ein Teil der Oberfläche **O_{KK}** durch die Oberfläche des Rahmenteils **R₁** gebildet wird, das heißt, dass das Rahmenteil **R₁** an der Oberfläche **O_{KK}** unmittelbar zugänglich ist, so dass es an der Oberfläche **O_{KK}** zum Beispiel mit wässriger Lösung, alkoholischer Lösung, Alkohol oder Wasser benetzt werden kann.

"Direkt kontaktierbar" bedeutet mit Bezug auf das von der Trennwand **W** umfasste Rahmenteil **R₂**, dass ein Teil der Oberfläche **O_{A/MK}** durch die Oberfläche des Rahmenteils **R₂** gebildet wird, das heißt dass das Rahmenteil **R₂** an der Oberfläche **O_{A/MK}** unmittelbar zugänglich ist, so dass es an der Oberfläche **O_{A/MK}** zum Beispiel mit wässriger Lösung, alkoholischer Lösung, Alkohol oder Wasser benetzt werden kann.

Für die Anordnung des Rahmenelements **R** in der Trennwand **W** bedeutet dies insbesondere, dass es einen Weg von der Oberfläche **O_{KK}** auf der Seite **S_{KK}** zur Oberfläche **O_{A/MK}** auf der Seite **S_{A/MK}** gibt, der durch das Teil **R₁** und dann durch das Teil **R₂** (und gegebenenfalls durch eine Dichtung **Di**), aber nicht durch eine AFK, führt.

In einer bevorzugten Ausführungsform der Trennwand **W** gemäß dem ersten Aspekt der Erfindung werden 50 % bis 95 %, bevorzugter 60 bis 90 %, noch bevorzugter 70 bis 85 % der Oberfläche **O_{KK}** durch die von der Trennwand **W** umfassten AFKs gebildet, wobei noch bevorzugter der Rest der Oberfläche **O_{KK}** durch das Rahmenteil **R₁** gebildet werden.

In einer bevorzugten Ausführungsform der Trennwand **W** gemäß dem ersten Aspekt der Erfindung werden außerdem 50 % bis 95 %, bevorzugter 60 bis 90 %, noch bevorzugter 70 bis 85 % der Oberfläche **O_{A/MK}** durch die von der Trennwand **W** umfassten AFKs gebildet, wobei noch bevorzugter der Rest der Oberfläche **O_{A/MK}** durch das Rahmenteil **R₂** gebildet werden.

In einer bevorzugten Ausführungsform umfasst die Trennwand **W,** insbesondere zwischen Rahmenelement **R** und den AFKs, eine Dichtung **Di** (z.B. in den Abbildungen 3A, 3 B und 3 C gezeigt). Dadurch wird besonders gut gewährleistet, dass die Trennwand **W** flüssigkeitsdicht ist. Die Dichtung **Di** kann vom Fachmann für die jeweilige AFK bzw. das jeweilige Rahmenelement **R** ausgewählt werden.

Die Dichtung **Di** umfasst insbesondere ein Material, welches aus der Gruppe bestehend aus Elastomeren, Klebstoffe, bevorzugt Elastomeren, ausgewählt ist.

Als Elastomer kommt insbesondere Kautschuk in Betracht, bevorzugt Ethylen-Propylen-DienKautschuk ("EPDM"), Fluor-Polymer-Kautschuk ("FPM"), Perfluorpolymerkautschuk ("FFPM"), Acrylnitrilbutadienkautschuk ("NBR").

Die Dichtung **Di** wird bevorzugt so ausgewählt, dass sie bei der Befestigung der beiden Rahmenteile **R₁** und **R₂** aneinander und der Anordnung der AFKs zwischen den beiden Rahmenteilen **R₁** und **R₂** zusammengedrückt wird. Dies erhöht weiter die Dichtigkeit der Trennwand **W.**

In einer bevorzugten Ausführungsform umfasst die Trennwand **W** mindestens vier AFKs **F_{A}**, **F_{B}**, **F_{C}** und **F_{D}**, wobei sie dann noch bevorzugter genau vier AFKs **F_{A}**, **F_{B}**, **F_{C}** und **F_{D}** umfasst.

In einer weiteren bevorzugten Ausführungsform umfasst die Trennwand **W** mindestens neun AFKs **F_{A}**, **F_{B}**, **F_{C}**, **F_{D}**, **F_{E}**, **F_{F}**, **F_{G}**, **F_{H}** und **F_{I}** wobei sie dann noch bevorzugter genau neun AFKs **F_{A}**, **F_{B}**, **F_{C}**, **F_{D}**, **F_{E}**, **F_{F}**, **F_{G}**, **F_{H}** und **F_{I}** umfasst.

In einer weiteren bevorzugten Ausführungsform umfasst die Trennwand **W** mindestens zwölf AFKs **F_{A}**, **F_{B}**, **F_{C}**, **F_{D}**, **F_{E}**, **F_{F}**, **F_{G}**, **F_{H}**, **F_{I}**, **F_{J}**, **F_{K}** und **F_{L}**, wobei sie dann noch bevorzugter genau zwölf AFKs **F_{A}**, **F_{B}**, **F_{C}**, **F_{D}**, **F_{E}**, **F_{F}**, **F_{G}**, **F_{H}**, **F_{I}**, **F_{J}**, **F_{K}** und **F_{L}** umfasst.

Durch diese erfindungsgemäße Anordnung von mindestens zwei AFKs neben einander in der Trennwand **W** ergibt sich gegenüber den herkömmlichen Trennwänden in den Elektrolysezellen des Standes der Technik eine weitere Ausbreitungsrichtung für die AFKs bei den Temperaturschwankungen, die sich bei dem Betrieb der Elektrolysezelle ergeben. In den Elektrolysezellen des Standes der Technik sind die NaSICON-Scheiben, die als Trennwände fungieren, durch die Außenwände der Elektrolysezelle oder von massiven Kunststoffrahmen eingegrenzt. Die bei der Ausdehnung auftretenden mechanischen Spannungen innerhalb der NaSICON können damit nicht abgeleitet werden, was zum Bruch der Keramik führen kann.

Demgegenüber grenzen die einzelnen AFKs innerhalb der Trennwand **W** gemäß dem ersten Aspekt der Erfindung an das Trennelement **R_{T}**, und im Falle der AFKs am Rand der Oberflächen **O_{KK}** und **O_{A/MK}** auch an das Randelement **R_{R}**, was zu zwei vorteilhaften Effekten führt, die beide die Langzeitstabilität der AFK erhöhen:
- jedem AFK steht mindestens ein weiterer Freiheitsgrad zur Verfügung, das heißt eine Dimension, in die es sich ausdehnen kann. Neben der Ausdehnung in z-Richtung (= das heißt über die Dicke der Keramikscheibe im rechten Winkel zur Ebene der Trennwand **W**) ist nun auch eine Ausdehnung in x- und/oder y-Richtung möglich, d.h. in waagerechter und senkrechter Richtung innerhalb der Ebene der Trennwand **W.** Diese Ausdehnungsrichtung ist nicht gegeben oder zumindest stark eingeschränkt, wenn die AFKs zum Beispiel als massive Scheibe den Querschnitt der Elektrolysezelle durchspannen und an die massive Wand der Elektrolysezelle grenzen;
- gegenüber einer gleich großen Trennwand, die nur aus einem AFK besteht, resultiert die Aufteilung in mehrere kleine AFKs darin, dass die Spannungen, die innerhalb der kleineren AFKs auftreten, auch absolut kleiner sind, schneller abgeführt werden können und sich dadurch nicht so schnell zu einer Spannung aufbauen können, die zum Bruch der AFK führt.

Dadurch ist die Tendenz zu brechen, für die "aufgeteilten" AFKs in der Trennwand **W** gegenüber dem Einsatz einer Scheibe deutlich reduziert.

### 4.1.1 Rahmenelement R

Das Rahmenelement **R** umfasst zwei einander gegenüberliegende Teile **R₁** und **R₂**, zwischen denen die mindestens zwei von der Trennwand **W** umfassten alkalikationenleitende Festelektrolytkeramiken **F_{A}** und **F_{B}** angeordnet sind. Diese Anordnung kann auf jede dem Fachmann geläufige Art erfolgen. In einer besonderen Ausführungsform klemmen die beiden Teile **R₁** und **R₂** die AFKs zwischen sich ein, wobei bevorzugt eine Dichtung **Di** eingesetzt werden, die den AFKs im Rahmenelement **R** zusätzlich Halt gibt. In einer anderen bevorzugten Ausführungsform werden die AFKs an die beiden Rahmenteile **R₁** und **R₂** geklebt. Als Klebstoffe **KI** können dazu alle dem Fachmann geläufigen Klebstoffe benutzt werden, die unter den Bedingungen der Elektrolyse stabil sind. Bevorzugte **KI** umfassen mindestens einen Stoff ausgewählt aus Epoxidharzen, Phenolharzen.

Die Trennwand **W** kann ein Scharnier aufweisen, an dem sich die beiden Teile **R₁** und **R₂** des Rahmenelements **R** auf- und zuklappen lassen.

Das Rahmenelement **R** umfasst insbesondere ein Material, welches ausgewählt ist aus der Gruppe bestehend aus Kunststoff, Glas, Holz ausgewählt ist. Besonders bevorzugt umfasst das Rahmenelement **R** Kunststoff.

Noch bevorzugter handelt es sich bei dem Kunststoff um einen, der aus der Gruppe bestehend aus Polypropylen, Polystyren, Polyvinylchlorid ausgewählt ist.

In einer bevorzugten Ausführungsform ist zwischen Rahmenelement **R** und den von der Trennwand **W** umfassten AFKs eine Dichtung **Di** angebracht. Dies verbessert die Flüssigkeitsdichte der Trennwand **W.**

Das Rahmenelement **R** bildet ein Randelement **R_{R}** und ein Trennelement **R_{T}** aus.

### 4.1.1.1 Trennelement R_{T}

Als Trennelement **R_{T}** wird jener Bereich des Rahmenelements **R** bezeichnet, der zwischen mindestens zwei AFKs liegt und diese voneinander abtrennt. Das Trennelement **R_{T}** als Bereich des Rahmenelements **R** wird von den beiden Teilen **R₁** und **R₂** ausgebildet.

Als Trennelement **R_{T}**, welches vom Rahmenelement **R** ausgebildet wird, eignet sich jeder Körper, durch den die jeweiligen AFKs voneinander getrennt angeordnet werden können. Die AFKs schließen dabei lückenlos an das Trennelement **R_{T}**, an, um die Funktion der Trennwand **W** nicht zu beeinträchtigen, die in der Elektrolysezelle **E** die Kathodenkammer flüssigkeitsdicht von der benachbarten Mittel- bzw. Anodenkammer abtrennen soll.

Die Form des Trennelements **R_{T}** kann vom Fachmann insbesondere in Abhängigkeit von der Anzahl und Form der AFKs, die die Trennwand **W** umfasst, gewählt werden.

Umfasst die Trennwand **W** beispielsweise zwei oder drei AFKs, können diese jeweils durch einen zwischen den AFKs angeordneten Steg als Trennelement **R_{T}** getrennt werden (siehe z.B. Abbildung 2 A).

Umfasst die Trennwand **W** vier oder mehr AFKs, können diese durch ein Trennelement **R_{T}**, welches die Form eines Kreuzes (siehe Abbildung 2 B und 6 A) oder Gitters (siehe Abbildung 6 B) hat, getrennt werden.

Es ist bevorzugt, dass die Trennwand **W** mindestens vier AFKs umfasst und noch bevorzugter, dass das Trennelements **R_{T}** dann kreuzförmig oder gitterförmig ist, da den AFKs dann alle drei Dimensionen vollständig für die thermische Ausdehnung/Schrumpfung zur Verfügung stehen.

Das Trennelement **R_{T}** ist dabei insbesondere so ausgeformt, dass das jeweilige AFK in das Trennelement eingepasst oder eingeklemmt werden kann. Dies kann schon bei der Herstellung der Trennwand **W** entsprechend durchgeführt werden.

Das Trennelement **R_{T}** umfasst bevorzugt ein Material, welches aus der Gruppe bestehend aus Kunststoff, Glas, Holz ausgewählt ist. Besonders bevorzugt umfasst das Trennelement **R_{T}** Kunststoff.

Noch bevorzugter handelt es sich bei dem Kunststoff um einen, der aus der Gruppe bestehend aus Polypropylen, Polystyren, Polyvinylchlorid ("PVC") ausgewählt ist. PVC umfasst auch nachchloriertes Polyvinylchlorid ("PVC-C").

### 4.1.1.2 Randelement R_{R}

Das Rahmenelement **R** bildet neben dem Trennelement **R_{T}** auch ein Randelement **R_{R}** aus. Das Randelement **R_{R}** als Bereich des Rahmenelements **R** wird von den beiden Teilen **R₁** und **R₂** ausgebildet. Das Randelement **R_{R}** (im Unterschied zum Trennelement **R_{T}**) ist jener Bereich des Rahmenelements **R,** der nicht zwischen den von der Trennwand **W** umfassten alkalikationenleitenden Festelektrolytkeramiken angeordnet ist, diese also nicht voneinander trennt.

Das Randelement **R_{R}** begrenzt die Oberflächen **O_{KK}** und **O_{A/MK}** mindestens teilweise, bevorzugt vollständig. Das bedeutet insbesondere: Das Randelement **R_{R}** umschließt die Oberflächen **O_{KK}** und **O_{A/MK}** mindestens teilweise, bevorzugt vollständig.

Das Randelement **R_{R}** kann dabei als ein Teil der Oberflächen **O_{KK}** und **O_{A/MK}** ausgebildet sein oder nicht. Bevorzugt ist das Randelement **R_{R}** als ein Teil der Oberflächen **O_{KK}** und **O_{A/MK}** ausgebildet.

Das Randelement **R_{R}** ist insbesondere über die Oberflächen **O_{KK}** und **O_{A/MK}** direkt kontaktierbar oder nicht direkt kontaktierbar.

Bevorzugt ist das Randelement **R_{R}** über die Oberflächen **O_{KK}** und **O_{A/MK}** direkt kontaktierbar. In dieser bevorzugten Ausführungsform ist das Randelement **R_{R}** als Teil von **R₁** über die Oberfläche **O_{KK}** direkt kontaktierbar und als Teil von **R₂** über die Oberfläche **O_{A/MK}** direkt kontaktierbar.
• "Nicht direkt kontaktierbar" bedeutet mit Bezug auf das von der Trennwand **W** umfasste Randelement **R_{R}**, dass das Randelement **R_{R}** ausschließlich als mindestens ein Teil der Oberflächen jener Seiten der Trennwand **W** ausgebildet ist, bei denen es sich nicht um die Seiten **S_{KK}** und **S_{A/MK}** handelt. Insbesondere bildet das Randelement **R_{R}** dann mindestens 1 %, bevorzugter mindestens 25 %, bevorzugter mindestens 50 %, noch bevorzugter 100 % der Oberflächen der Seiten der Trennwand **W** aus, bei denen es sich nicht um die Seiten **S_{KK}** und **S_{A/MK}** handelt.
• "Direkt kontaktierbar" bedeutet mit Bezug auf das von der Trennwand **W** umfasste Randelement **R_{R}**, dass ein Teil der Oberfläche **O_{KK}** durch die Oberfläche des Randelements **R_{R}** gebildet wird, das heißt, dass das Randelement **R_{R}** an der Oberfläche **O_{KK}** unmittelbar zugänglich ist, so dass es an der Oberfläche **O_{KK}** zum Beispiel mit wässriger Lösung, alkoholischer Lösung, Alkohol oder Wasser benetzt werden kann. "Direkt kontaktierbar" bedeutet außerdem mit Bezug auf das von der Trennwand **W** umfasste Randelement **R_{R}**, dass ein Teil der Oberfläche **O_{A/MK}** durch die Oberfläche des Randelements **R_{R}** gebildet wird, das heißt, dass das Randelement **R_{R}** an der Oberfläche **O_{A/MK}** unmittelbar zugänglich ist, so dass es an der Oberfläche **O_{A/MK}** zum Beispiel mit wässriger Lösung, alkoholischer Lösung, Alkohol oder Wasser benetzt werden kann. Für die Anordnung des Randelements **R_{R}** in der Trennwand **W** bedeutet dies, dass es dann einen Weg von der Oberfläche **O_{KK}** auf der Seite **S_{KK}** auf die Oberfläche **O_{A/MK}** auf der Seite **S_{A/MK}** gibt, der vollständig durch das Randelement **R_{R}** führt.
   Dies schließt die folgenden Ausführungsformen ein:
   - ein Teil des Randes der Oberflächen **O_{KK}** und **O_{A/MK}** wird durch das Randelement **R_{R}** gebildet
   - der Rand der Oberflächen **O_{KK}** und **O_{A/MK}** wird vollständig durch das Randelement **R_{R}** gebildet (wie in den Abbildungen 2 A, 2 B, 6 A, 6 B gezeigt).
   Dabei kann das Randelement **R_{R}** zusätzlich als mindestens ein Teil der Oberflächen jener Seiten der Trennwand **W** ausgebildet sein, bei denen es sich nicht um die Seiten **S_{KK}** und **S_{A/MK}** handelt. Insbesondere bildet das Randelement **R_{R}** mindestens 1 %, bevorzugter mindestens 25 %, bevorzugter mindestens 50 %, noch bevorzugter 100 % der Oberflächen der Seiten der Trennwand **W aus,** bei denen es sich nicht um die Seiten **S_{KK}** und **S_{A/MK}** handelt.

In Fig. 2 A und Fig. 2 B sind beispielsweise Ausführungsformen gezeigt, in denen das Randelement **R_{R}** die Oberflächen jener Seiten der Trennwand **W,** bei denen es sich nicht um die Seiten **S_{KK}** und **S_{A/MK}** handelt, vollständig ausbildet.

Das Randelement **R_{R}** umfasst bevorzugt ein Material, welches aus der Gruppe bestehend aus Kunststoff, Glas, Holz ausgewählt ist. Besonders bevorzugt umfasst das Randelement **R_{R}** Kunststoff.

Noch bevorzugter handelt es sich bei dem Kunststoff um einen, der aus der Gruppe bestehend aus Polypropylen, Polystyren, Polyvinylchlorid ("PVC") ausgewählt ist. PVC umfasst auch nachchloriertes Polyvinylchlorid ("PVC-C").

In einer weiteren bevorzugten Ausführungsform umfassen das Randelement **R_{R}** und das Trennelement **R_{T}** das gleiche Material, noch bevorzugter umfassen beide Kunststoff, der noch bevorzugter aus Polypropylen, Polystyren, Polyvinylchlorid, PVC-C ausgewählt ist.

In einer bevorzugten Ausführungsform ist mindestens ein Teil des Trennelements **R_{T}** einstückig mit mindestens einem Teil des Rahmenelements **R_{R}** ausgebildet. Dies bedeutet insbesondere, dass mindestens ein Teil des Trennelements **R_{T}** in das Randelement **R_{R}** übergeht.

Die Ausführungsform eines Randelements **R_{R}** hat den weiteren Vorteil, dass es in der Elektrolysezelle **E** als Teil der Außenwand fungiert. Dieser Teil der Trennwand **W** kontaktiert die Lösungen im jeweiligen Innenraum **I_{KK}**, **I_{KA}** bzw. **I_{KM}** nicht, weshalb es Verschwendung wäre, diesen Teil der Trennwand **W** durch eine Festelektrolytkeramik auszubilden. Daneben ist der Teil der Trennwand **W,** welcher zwischen die Außenwand geklemmt oder ein Teil davon bildet, Kräften ausgesetzt, denen die brüchige Festelektrolytkeramik gegebenenfalls nicht standhält. Stattdessen wird somit ein bruchsicheres und billigeres Material für das Rahmenelement **R** ausgewählt.

### 4.1.2 Befestigungselemente B_{R} und B_{T}

Die Trennwand **W** gemäß dem ersten Aspekt der Erfindung ist dadurch gekennzeichnet, dass **R₁** und **R₂** durch mindestens ein Befestigungselement **B_{R}** am Randelement **R_{R}** aneinander befestigt sind,
und **R₁** und **R₂** durch mindestens ein Befestigungselement **B_{T}** am Trennelement **R_{T}** aneinander befestigt sind.

"Am Randelement **R_{R}**" ist in diesem Kontext zu verstehen im Sinne von "im Bereich des Randelements **R_{R}**".

"Am Trennelement **R_{T}**" ist in diesem Kontext zu verstehen im Sinne von "im Bereich des Randelements **R_{T}**".

Als Befestigungselemente **B_{R}** und **B_{T}** eignen sich sämtliche dem Fachmann geläufige Mittel, um die beiden Rahmenteile **R₁** und **R₂** aneinander zu befestigen.

Diese Befestigungselemente **B_{R}** und **B_{T}** sind insbesondere ausgewählt aus Scharnieren, Klammern, Nägel, Schrauben, Haken, bevorzugt aus Schrauben, Haken, am bevorzugtesten Haken.

Die Befestigungselemente **B_{R}** und **B_{T}** können aus einem dem Fachmann geläufigen Material sein. Bevorzugt umfassen sie ein Material, welches ausgewählt ist aus der Gruppe bestehend aus Kunststoff, Glas, Holz ausgewählt ist. Besonders bevorzugt ist Kunststoff.

Noch bevorzugter handelt es sich bei dem Kunststoff um einen, der aus der Gruppe bestehend aus Polypropylen, Polystyren, Polyvinylchlorid, PVC-C ausgewählt ist.

Noch bevorzugter sind das mindestens eine Befestigungselement **B_{R}** und das mindestens eine Befestigungselement **B_{T}** jeweils in Form von ineinander greifenden Haken **B_{H}** ausgebildet. Im aneinander befestigten Zustand durchspannen diese Haken insbesondere dann die Trennwand **W.**

Dazu werden als **B_{T}** vorteilhafterweise jeweils an den einander zugewandten Seiten der beiden Rahmenteile **R₁** und **R₂** im Bereich des Trennelements **R_{T}** einander gegenüberliegende Paare von Haken **B_{H}** ausgebildet, die bei Anordnung der AFKs zwischen den Rahmenteilen **R₁** und **R₂**, bevorzugt reversibel, ineinander greifen. Es versteht sich von selbst, dass für diese Ausführungsform das Randelement **R_{R}** über die Oberflächen **O_{KK}** und **O_{A/MK}** direkt kontaktierbar sein muss.

Dazu werden als **B_{R}** vorteilhafterweise jeweils an den einander zugewandten Seiten der beiden Rahmenteile **R₁** und **R₂** im Bereich des Randelements **R_{R}** einander gegenüberliegende Paare von Haken **B_{H}** ausgebildet, die bei Anordnung der AFK zwischen den Rahmenteilen **R₁** und **R₂** reversibel ineinander greifen.

"Einander zugewandten Seiten der beiden Rahmenteile **R₁** und **R₂**" bezieht sich auf die Seiten der beiden Rahmenteile, deren Oberfläche im Fall von **R₁** nicht über die Oberfläche **O_{KK}** direkt kontaktierbar ist und deren Oberfläche im Fall von **R₂** nicht über die Oberfläche **O_{A/MK}** direkt kontaktierbar ist. Dies sind insbesondere die Oberflächen von **R₁** und **R₂**, die in der Trennwand **W** die AFKs und/oder die Dichtung **Di** kontaktieren.

Die Befestigungsmittel **B_{R}** und **B_{T}**, insbesondere die Haken, sind bevorzugt einstückig mit mindestens einem der Teile **R₁** und **R₂** ausgebildet (Abbildung 3 B).

In einer anderen bevorzugten Ausführungsform ist das mindestens eine Befestigungselement **B_{R}** und das mindestens eine Befestigungselement **B_{T}** jeweils in Form von ineinander greifenden Haken **B_{H}** ausgebildet.

In einer bevorzugten Ausführungsform sind Haken **B_{H}** an beiden Rahmenteilen **R₁** und **R₂** so im Bereich des Trennelements **R_{T}** und im Bereich des Randelements **R_{R}** ausgebildet, dass sie bei der Anordnung der AFKs zwischen den Rahmenteilen **R₁** und **R₂** ineinandergreifen und so die Rahmenteilen **R₁** und **R₂** aneinander befestigen. Noch bevorzugter ist dies reversibel, das heißt die Haken **B_{H}** können voneinander gelöst werden. Dies kann beispielsweise dadurch erreicht werden, dass die Haken gegeneinander verschiebbar ausgebildet sind.

Die Anbringung der Befestigungsmittel **B_{R}** und **B_{T}** sowohl am Randelement **R_{R}** als auch am Trennelement **R_{T}** verbessert überraschend die Stabilität der Trennwand **W.** Durch die Verwendung von Befestigungsmitteln im Bereich nicht nur des Randelements **R_{R}** sondern auch des Trennelements **R_{T}** ist es möglich, Kompressionskräfte nicht nur an den äußeren Ecken, sondern über den gesamten Bereich des Rahmenelements **R** einzubringen.

### 4.1.3 Alkalikationenleitender Festelektrolytkeramik ("AFK")

Als von der Trennwand **W** umfassten alkalikationenleitende Festelektrolytkeramiken **F_{A}**, **F_{B}** etc. kommt jeder Festelektrolyt in Frage, durch welchen Kationen, insbesondere Alkalikationen, noch bevorzugter Natriumkationen, von der Seite **S_{A/MK}** auf die Seite **S_{KK}** transportiert werden können. Solche Festelektrolyten sind dem Fachmann bekannt und beispielsweise in der DE 10 2015 013 155 A1, in der WO 2012/048032 A2, Absätze [0035], [0039], [0040], in der US 2010/0044242 A1, Absätze [0040], [0041], in der DE 10360758 A1, Absätze [014] bis [025] beschrieben. Sie werden kommerziell unter dem Namen NaSICON, LiSICON, KSICON vertrieben. Ein natriumionenleitender Festelektrolyt ist bevorzugt, wobei dieser noch bevorzugter eine NaSICON-Struktur aufweist. Erfindungsgemäß einsetzbare NaSICON-Strukturen sind außerdem beispielsweise beschrieben von N. Anantharamulu, K. Koteswara Rao, G. Rambabu, B. Vijaya Kumar, Velchuri Radha, M. Vithal, J Mater Sci 2011, 46, 2821-2837.

In einer bevorzugten Ausführungsform der Trennwand **W** weisen die von der Trennwand **W** umfassten alkalikationenleitende Festelektrolytkeramiken unabhängig voneinander eine NaSICON-Struktur der Formel M^{I}_{1+2w+x-y+z} M^{II}_{w} M^{III}ₓ Zr^{IV}_{2-w-x-y} M^{V}_{y} (SiO₄)_{z} (PO₄)_{3-z} auf.

M' ist dabei ausgewählt aus Na⁺, Li⁺, bevorzugt Na⁺.

M" ist dabei ein zweiwertiges Metallkation, bevorzugt ausgewählt aus Mg²⁺, Ca²⁺, Sr²⁺, Ba²⁺, Co²⁺, Ni²⁺, bevorzugter ausgewählt aus Co²⁺, Ni²⁺.

M^{III} ist dabei ein dreiwertiges Metallkation, bevorzugt ausgewählt aus Al³⁺, Ga³⁺, Sc³⁺, La³⁺, Y³⁺, Gd³⁺, Sm³⁺, Lu³⁺, Fe³⁺, Cr³⁺, bevorzugter ausgewählt aus Sc³⁺, La³⁺, Y³⁺, Gd³⁺, Sm³⁺, besonders bevorzugt ausgewählt aus Sc³⁺, Y³⁺, La³⁺.

M^{V} ist dabei ein fünfwertiges Metallkation, bevorzugt ausgewählt aus V⁵⁺, Nb⁵⁺, Ta⁵⁺.

Die römischen Indizes I, II, III, IV, V geben die Oxidationszahlen an, in der die jeweiligen Metallkationen vorliegen.

w, x, y, z sind reelle Zahlen, wobei gilt, dass 0 ≤ x < 2, 0 ≤ y < 2, 0 ≤ w < 2, 0 ≤ z < 3, und wobei w, x, y, z so gewählt werden, dass gilt 1 + 2w + x - y + z ≥ 0 und 2 - w - x - y ≥ 0.

Die NaSICON-Struktur hat dabei erfindungsgemäß noch bevorzugter eine Struktur der Formel Na_{(1 + v})Zr₂SiᵥP_{(3 - v)}O₁₂, wobei v eine reelle Zahl ist, für die 0 ≤ v ≤ 3 gilt. Am bevorzugtesten gilt v = 2.4

In einer bevorzugten Ausführungsform der Trennwand **W** gemäß dem ersten Aspekt der Erfindung weisen die von der Trennwand **W** umfassten AFKs die gleiche Struktur auf.

### 4.1.4 Herstellung der Trennwand W

Die Trennwand **W** kann nach dem Fachmann bekannten Verfahren hergestellt werden.

Beispielsweise können die von der Trennwand **W** umfassten AFKs, gegebenenfalls mit Dichtungen, in eine entsprechende Gießform eingelegt werden und das Rahmenelement **R** über flüssigen Kunststoff gegossen und dann erstarren gelassen werden (Spritzgussverfahren). Beim Erstarren umschließt dieser dann die AFKs. Die Befestigungselemente **B_{T}** und **B_{R}** können in einem Guss durch eine geeignete Form am Rahmenelement **R** angebracht werden (und liegen dann einstückig mit diesem vor). In dieser Ausführungsform eignen sich besonders ineinander greifende Haken **B_{H}** als Befestigungsmittel.

Alternativ wird das Rahmenelement **R** bzw. die Rahmenteile **R₁** und **R₂** separat gegossen. Die Befestigungselemente **B_{T}** und **B_{R}** können in einem Guss durch eine geeignete Form am Rahmenelement **R** angebracht werden (und liegen dann einstückig mit diesem vor). In dieser Ausführungsform eignen sich besonders ineinander greifende Haken **B_{H}** als Befestigungsmittel.

Alternativ können die AFKs, gegebenenfalls mit der Dichtung Di, zwischen den Rahmenteilen **R₁** und **R₂** angeordnet werden und die Befestigungselemente **B_{T}** und **B_{R}** dann angebracht werden. Dazu eignen sich beispielsweise Schrauben oder Nägel, die durch geeignete Auslassungen in den Rahmenteilen **R₁** und **R₂** getrieben werden und diese aneinander befestigen.
und dann lückenlos an die mindestens zwei AFKs befestigt (zum Beispiel geklebt).

### 4.2 Elektrolysezelle E

Die Trennwand W gemäß dem ersten Aspekt der Erfindung eignet sich als Trennwand in einer Elektrolysezelle **E.**

In einem zweiten Aspekt betrifft die vorliegende Erfindung deshalb eine Elektrolysezelle **E,** umfassend
- mindestens eine Anodenkammer **K_{A}** mit mindestens einem Zulauf **Z_{KA}**, mindestens einem Ablauf **A_{KA}** und einem Innenraum **I_{KA}**, der eine anodische Elektrode **E_{A}** umfasst,
- mindestens eine Kathodenkammer **K_{K}** mit mindestens einem Zulauf **Z_{KK}**, mindestens einem Ablauf **A_{KK}** und einem Innenraum **I_{KK}**, der eine kathodische Elektrode **E_{K}** umfasst,
- und gegebenenfalls mindestens eine dazwischen liegende Mittelkammer **K_{M}** mit mindestens einem Zulauf **Z_{KM}**, mindestens einem Ablauf **A_{KM}** und einem Innenraum **I_{KM}**, wobei dann **I_{KA}** und **I_{KM}** durch eine Diffusionsbarriere **D** voneinander abgetrennt sind, und **A_{KM}** durch eine Verbindung **V_{AM}** mit dem Zulauf **Z_{KA}** verbunden ist, so dass durch die Verbindung **V_{AM}** Flüssigkeit aus **I_{KM}** in **I_{KA}** geleitet werden kann,
wobei
- in den Fällen, in denen die Elektrolysezelle **E** keine Mittelkammer **K_{M}** umfasst, **I_{KA}** und **I_{KK}** durch eine Trennwand **W** gemäß dem ersten Aspekt der Erfindung voneinander abgetrennt sind,
- in den Fällen, in denen die Elektrolysezelle **E** mindestens eine Mittelkammer **K_{M}** umfasst, **I_{KA}** und **I_{KM}** durch eine Trennwand **W** gemäß dem ersten Aspekt der Erfindung voneinander abgetrennt sind,
dadurch gekennzeichnet, dass
die von der Trennwand **W** umfassten alkalikationenleitenden Festelektrolytkeramiken, und insbesondere auch das Trennelement **R_{T}**, den Innenraum **I_{KK}** auf der Seite **S_{KK}** über die Oberfläche **O_{KK}** direkt kontaktieren,
und
- in den Fällen, in denen die Elektrolysezelle **E** keine Mittelkammer **K_{M}** umfasst, die von der Trennwand **W** umfassten alkalikationenleitenden Festelektrolytkeramiken, und insbesondere auch das Rahmenelement **R,** den Innenraum **I_{KA}** auf der Seite **S_{A/MK}** über die Oberfläche **O_{A/MK}** direkt kontaktieren,
- in den Fällen, in denen die Elektrolysezelle **E** mindestens eine Mittelkammer **K_{M}** umfasst, die von der Trennwand **W** umfassten alkalikationenleitenden Festelektrolytkeramiken, und insbesondere auch das Rahmenelement **R,** den Innenraum **I_{KM}** auf der Seite **S_{A/MK}** über die Oberfläche **O_{A/MK}** direkt kontaktieren.

Die Elektrolysezelle **E** gemäß dem zweiten Aspekt der Erfindung umfasst mindestens eine Anodenkammer **K_{A}** und mindestens eine Kathodenkammer **K_{K}** und gegebenenfalls mindestens eine dazwischen liegende Mittelkammer **K_{M}**. Dies umfasst auch Elektrolysezellen **E,** welche mehr als eine Anodenkammer **K_{A}** und/oder Kathodenkammer **K_{K}** und/oder Mittelkammer **K_{M}** aufweisen. Solche Elektrolysezellen, in denen diese Kammern modulartig aneinandergefügt werden, sind beispielsweise in der DD 258 143 A3 und der US 2006/0226022 A1 beschrieben.

Die Elektrolysezelle **E** gemäß dem zweiten Aspekt der Erfindung umfasst in einer bevorzugten Ausführungsform der Erfindung eine Anodenkammer **K_{A}** und eine Kathodenkammer **K_{K}** und gegebenenfalls eine dazwischen liegende Mittelkammer **K_{M}**.

Die Elektrolysezelle **E** weist üblicherweise eine Außenwand **W_{A}** auf. Die Außenwand **W_{A}** ist insbesondere aus einem Material, welches aus der Gruppe bestehend aus Stahl, bevorzugt gummiertem Stahl, Kunststoff, der insbesondere aus Telene ^{®} (duroplastischem Polydicyclopentadien), PVC (Polyvinylchlorid), PVC-C (nachchloriertes Polyvinylchlorid), PVDF (Polyvinylidenfluorid) ausgewählt ist. **W_{A}** kann insbesondere für Zuläufe und Abläufe durchbrochen sein. Innerhalb von **W_{A}** liegen dann die mindestens eine Anodenkammer **K_{A}**, die mindestens eine Kathodenkammer **K_{K}** und in den Ausführungsformen, in denen die Elektrolysezelle **E** eine solche umfasst, die mindestens eine dazwischen liegende Mittelkammer **K_{M}**.

### 4.2.1 Kathodenkammer K_{K}

Die Kathodenkammer **K_{K}** weist mindestens einen Zulauf **Z_{KK}**, mindestens einen Ablauf **A_{KK}** und einen Innenraum **I_{KK}**, der eine kathodische Elektrode **E_{K}** umfasst, auf.

Der Innenraum **I_{KK}** der Kathodenkammer **K_{K}** ist durch die Trennwand **W** gemäß dem ersten Aspekt der Erfindung vom Innenraum **I_{KA}** der Anodenkammer **K_{A}** abgetrennt, falls die Elektrolysezelle **E** keine Mittelkammer **K_{M}** umfasst. Der Innenraum **I_{KK}** der Kathodenkammer **K_{K}** ist durch die Trennwand **W** gemäß dem ersten Aspekt der Erfindung vom Innenraum **I_{KM}** der Mittelkammer **K_{M}** abgetrennt, falls die Elektrolysezelle **E** mindestens eine Mittelkammer **K_{M}** umfasst.

### 4.2.1.1 Kathodische Elektrode E_{K}

Die Kathodenkammer **K_{K}** umfasst einen Innenraum **I_{KK}**, der wiederum eine kathodische Elektrode **E_{K}** umfasst. Als solche kathodische Elektrode **E_{K}** kommt jede dem Fachmann geläufige Elektrode in Frage, die unter den Bedingungen des erfindungsgemäßen Verfahrens nach dem dritten Aspekt der Erfindung stabil ist. Solche sind insbesondere in WO 2014/008410 A1, Absatz [025] oder DE 10360758 A1, Absatz [030] beschrieben. Diese Elektrode **E_{K}** kann aus der Gruppe bestehend aus Maschenwolle, dreidimensionale Matrixstruktur oder "Kugeln" ausgewählt sein. Die kathodische Elektrode **E_{K}** umfasst insbesondere ein Material, welches ausgewählt ist aus der Gruppe bestehend aus Stahl, Nickel, Kupfer, Platin, platinierte Metalle, Palladium, auf Kohle geträgertes Palladium, Titan. Bevorzugt umfasst **E_{K}** Nickel.

In den Ausführungsformen der Elektrolysezelle **E** gemäß dem zweiten Aspekt der vorliegenden Erfindung, in denen diese eine Mittelkammer **K_{M}** umfasst, befindet sich diese zwischen der Anodenkammer **K_{A}** und der Kathodenkammer **K_{K}**.

### 4.2.1.2 Zulauf Z_{KK} und Ablauf A_{KK}

Die Kathodenkammer **K_{K}** umfasst auch einen Zulauf **Z_{KK}** und einen Ablauf **A_{KK}**. Dies ermöglicht es, dem Innenraum **I_{KK}** der Kathodenkammer **K_{K}** Flüssigkeit, wie zum Beispiel die Lösung **L₂**, zuzufügen und darin befindliche Flüssigkeit, wie zum Beispiel die Lösung **L₁**, zu entfernen. Der Zulauf **Z_{KK}** und der Ablauf **A_{KK}** sind dabei so an der Kathodenkammer **K_{K}** angebracht, dass die Flüssigkeit beim Durchströmen des Innenraums **I_{KK}** der Kathodenkammer **K_{K}** die kathodische Elektrode **E_{K}** kontaktiert. Dies ist die Voraussetzung dafür, dass bei der Durchführung des erfindungsgemäßen Verfahrens gemäß dem dritten Aspekt der Erfindung am Ablauf A**_{KK}** die Lösung **L₁** erhalten wird, wenn die Lösung **L₂** eines Alkalialkoholats XOR im Alkohol ROH durch den Innenraum **I_{KK}** der Kathodenkammer **K_{K}** geleitet wird.

Der Zulauf **Z_{KK}** und der Ablauf **A_{KK}** können nach dem Fachmann bekannten Verfahren an der Elektrolysezelle **E** angebracht werden, z.B. durch Bohrungen in der Außenwand und entsprechenden Anschlüssen (Ventilen), die die Ein- bzw. Ausleitung von Flüssigkeit vereinfachen.

### 4.2.2 Anodenkammer K_{A}

Die Anodenkammer **K_{A}** weist mindestens einen Zulauf **Z_{KA}**, mindestens einen Ablauf **A_{KA}** und einem Innenraum **I_{KA},** der eine anodische Elektrode **E_{A}** umfasst, auf.

Der Innenraum **I_{KA}** der Anodenkammer **K_{A}** ist, falls die Elektrolysezelle **E** eine Mittelkammer **K_{M}** umfasst, durch eine Diffusionsbarriere **D** vom Innenraum **I_{KM}** der Mittelkammer **K_{M}** abgetrennt.

Falls die Elektrolysezelle **E** keine Mittelkammer **K_{M}** umfasst, ist der Innenraum I_{KA} der Anodenkammer **K** durch die Trennwand **W** vom Innenraum **I_{KK}** der Kathodenkammer **K_{K}** abgetrennt.

### 4.2.2.1 Anodische Elektrode E_{A}

Die Anodenkammer **K_{A}** umfasst einen Innenraum **I_{KA},** der wiederum eine anodische Elektrode **E_{A}** umfasst. Als solche anodische Elektrode **E_{A}** kommt jede dem Fachmann geläufige Elektrode in Frage, die unter den Bedingungen des erfindungsgemäßen Verfahrens nach dem dritten Aspekt der Erfindung stabil ist. Solche sind insbesondere in WO 2014/008410 A1, Absatz [024] oder DE 10360758 A1, Absatz [031] beschrieben. Diese Elektrode **E_{A}** kann aus einer Schicht bestehen oder aus mehreren planen, zueinander parallelen Schichten bestehen, die jeweils perforiert oder expandiert sein können. Die anodische Elektrode **E_{A}** umfasst insbesondere ein Material, welches ausgewählt ist aus der Gruppe bestehend aus Rutheniumoxid, Iridiumoxid, Nickel, Kobalt, Nickelwolframat, Nickeltitanat, Edelmetalle wie insbesondere Platin, welches auf einem Träger wie Titan oder Kovar^{®} (einer Eisen/Nickel/Kobalt-Legierung, in denen die einzelnen Anteile bevorzugt wie folgt sind: 54 Massen-% Eisen, 29 Massen-% Nickel, 17 Massen-% Cobalt) geträgert ist. Weitere mögliche Anodenmaterialien sind insbesondere Edelstahl, Blei, Graphit, Wolframcarbid, Titandiborid. Bevorzugt umfasst die anodische Elektrode **E_{A}** eine mit Rutheniumoxid/ Iridiumoxid beschichtete Titananode (RuO₂+ IrO₂ / Ti).

### 4.2.2.2 Zulauf Z_{KA} und Ablauf A_{KA}

Die Anodenkammer **K_{A}** umfasst auch einen Zulauf **Z_{KA}** und einen Ablauf **A_{KA}.** Dies ermöglicht es, dem Innenraum **I_{KA}** der Anodenkammer **K_{A}** Flüssigkeit, wie zum Beispiel die Lösung **L₃,** zuzufügen und darin befindliche Flüssigkeit, wie zum Beispiel die Lösung **L₄,** zu entfernen. Der Zulauf **Z_{KA}** und der Ablauf **A_{KA}** sind dabei so an der Anodenkammer **K_{A}** angebracht, dass die Flüssigkeit beim Durchströmen des Innenraums **I_{KA}** der Anodenkammer **K_{A}** die anodische Elektrode **E_{A}** kontaktiert. Dies ist die Voraussetzung dafür, dass bei der Durchführung des erfindungsgemäßen Verfahrens gemäß dem dritten Aspekt der Erfindung am Ablauf **A_{KA}** die Lösung **L₄** erhalten wird, wenn die Lösung **L₃** eines Salzes **S** durch den Innenraum **I_{KA}** der Anodenkammer **K_{A}** geleitet wird.

Der Zulauf **Z_{KA}** und der Ablauf **A_{KA}** können nach dem Fachmann bekannten Verfahren an der Elektrolysezelle **E** angebracht werden, z.B. durch Bohrungen in der Außenwand und entsprechenden Anschlüssen (Ventilen), die die Ein- bzw. Ausleitung von Flüssigkeit vereinfachen. Der Zulauf **Z_{KA}** kann in bestimmten Ausführungsformen, in denen die Elektrolysezelle E eine Mittelkammer **K_{M}** umfasst, auch innerhalb der Elektrolysezelle liegen, beispielsweise als Perforation in der Diffusionsbarriere **D.**

### 4.2.3 Optionale Mittelkammer K_{M}

Die Elektrolysezelle **E** gemäß dem zweiten Aspekt der Erfindung weist bevorzugt eine Mittelkammer **K_{M}** auf. Die optionale Mittelkammer **K_{M}** liegt zwischen Kathodenkammer **K_{K}** und Anodenkammer **K_{A}.** Sie umfasst mindestens einen Zulauf **Z_{KM},** mindestens einen Ablauf **A_{KM}** und einen Innenraum **I_{KM}.**

Der Innenraum **I_{KA}** der Anodenkammer **K_{A}** ist, falls die Elektrolysezelle **E** eine Mittelkammer **K_{M}** umfasst, durch eine Diffusionsbarriere **D** vom Innenraum **I_{KM}** der Mittelkammer **K_{M}** abgetrennt. **A_{KM}** ist dann außerdem durch eine Verbindung **V_{AM}** mit dem Zulauf **Z_{KA}** verbunden, so dass durch die Verbindung **V_{AM}** Flüssigkeit aus **I_{KM}** in **I_{KA}** geleitet werden kann.

### 4.2.3.1 Diffusionsbarriere D

Der Innenraum **I_{KM}** der optionalen Mittelkammer **K_{M}** ist durch eine Diffusionsbarriere **D** vom Innenraum **I_{KA}** der Anodenkammer **K_{A}** abgetrennt und durch die Trennwand **W** vom Innenraum **I_{KK}** der Kathodenkammer **K_{K}** abgetrennt.

Für die Diffusionsbarriere **D** kann jedes Material genutzt werden, welches unter den Bedingungen des erfindungsgemäßen Verfahrens nach dem dritten Aspekt der Erfindung stabil ist und den Übergang von Protonen von der im Innenraum **I_{KA}** der Anodenkammer **K_{A}** befindlichen Flüssigkeit in Innenraum **I_{KM}** der optionalen Mittelkammer **K_{M}** verhindert oder verlangsamt.

Als Diffusionsbarriere **D** wird insbesondere eine nicht ionenspezifische Trennwand oder eine für spezifische Ionen durchlässige Membran verwendet. Bevorzugt handelt es sich bei der Diffusionsbarriere **D** um eine nicht ionenspezifische Trennwand.

Das Material der nicht ionenspezifischen Trennwand ist insbesondere aus der Gruppe bestehend aus Gewebe, wobei es sich insbesondere um textiles Gewebe oder Metallgewebe handelt, Glas, wobei es sich insbesondere um gesintertes Glas oder Glasfritten handelt, Keramik, insbesondere keramische Fritten, Membrandiaphragmas ausgewählt, und ist besonders bevorzugt ein textiles Gewebe oder Metallgewebe, besonders bevorzugt ein textiles Gewebe. Das textile Gewebe umfasst bevorzugt Kunststoff, bevorzugter einen Kunststoff ausgewählt aus PVC, PVC-C, Polyvinylether ("PVE"), Polytetrafluorethylen ("PTFE").

Handelt es sich bei der Diffusionsbarriere **D** um eine "für spezifische Ionen durchlässige Membran", so bedeutet dies erfindungsgemäß, dass die jeweilige Membran die Diffusion bestimmter Ionen durch sie hindurch gegenüber anderen Ionen begünstigt. Insbesondere sind damit Membranen gemeint, die die Diffusion durch sie hindurch von Ionen einer bestimmten Ladungsart gegenüber entgegengesetzt geladenen Ionen begünstigen. Noch bevorzugter begünstigen für spezifische Ionen durchlässige Membranen außerdem die Diffusion bestimmter Ionen mit einer Ladungsart gegenüber anderen Ionen derselben Ladungsart durch sie hindurch.

Ist die Diffusionsbarriere **D** eine "für spezifische Ionen durchlässige Membran", handelt es sich insbesondere bei der Diffusionsbarriere **D** um eine anionenleitende Membran oder um eine kationenleitende Membran.

Anionenleitende Membranen sind erfindungsgemäß solche, die selektiv Anionen, bevorzugt selektiv bestimmte Anionen leiten. In anderen Worten begünstigen sie die Diffusion von Anionen durch sie hindurch gegenüber der von Kationen, insbesondere gegenüber Protonen, noch bevorzugter begünstigen sie zusätzlich die Diffusion von bestimmten Anionen durch sie hindurch gegenüber der Diffusion anderer Anionen durch sie hindurch.

Kationenleitende Membranen sind erfindungsgemäß solche, die selektiv Kationen, bevorzugt selektiv bestimmte Kationen leiten. In anderen Worten begünstigen sie die Diffusion von Kationen durch sie hindurch gegenüber der von Anionen, noch bevorzugter begünstigen sie zusätzlich die Diffusion von bestimmten Kationen, durch sie hindurch gegenüber der Diffusion anderer Kationen durch sie hindurch, noch viel mehr bevorzugter von Kationen, bei denen es sich nicht um Protonen handelt, noch bevorzugter um Natriumkationen handelt, gegenüber Protonen.

"Begünstigen die Diffusion bestimmter Ionen X gegenüber der Diffusion anderer Ionen Y" bedeutet insbesondere, dass der Diffusionskoeffizient (Einheit m²/s) der lonenart X bei einer gegebenen Temperatur für die betreffende Membran um den Faktor 10, bevorzugt 100, bevorzugt 1000 höher ist als der Diffusionskoeffizient der lonenart Y für die betreffende Membran.

Handelt es sich bei der Diffusionsbarriere **D** um eine "für spezifische Ionen durchlässige Membran", so ist es bevorzugt eine anionenleitende Membran, denn diese verhindert besonders gut die Diffusion von Protonen aus der Anodenkammer **K_{A}** in die Mittelkammer **K_{M}.**

Als anionenleitende Membran wird insbesondere eine solche eingesetzt, die für die vom Salz **S** umfassten Anionen selektiv ist. Solche Membranen sind dem Fachmann bekannt und können von ihm eingesetzt werden.

Das Salz **S** ist bevorzugt ein Halogenid, Sulfat, Sulfit, Nitrat, Hydrogencarbonat oder Carbonat von X, noch bevorzugter ein Halogenid.

Halogenide sind Fluoride, Chloride, Bromide, Jodide. Das bevorzugteste Halogenid ist Chlorid.

Bevorzugt wird als anionenleitende Membran eine für Halogenide, bevorzugt Chlorid, selektive Membran eingesetzt.

Anionenleitende Membranen sind beispielsweise von M.A. Hickner, A.M. Herring, E.B. Coughlin, Journal of Polymer Science, Part B: Polymer Physics 2013, 51, 1727-1735, von C.G. Arges, V. Ramani, P.N. Pintauro, Electrochemical Society Interface 2010, 19, 31-35,
in WO 2007/048712 A2 sowie auf Seite 181 des Lehrbuchs von Volkmar M. Schmidt Elektrochemische Verfahrenstechnik: Grundlagen, Reaktionstechnik, Prozessoptimierung,
1. Auflage (8. Oktober 2003) beschrieben.

Noch bevorzugter werden demnach als anionenleitende Membran organische Polymere, welche insbesondere aus Polyethylen, Polybenzimidazolen, Polyetherketonen, Polystyrol, Polypropylen oder fluorierten Membranen wie Polyperfluorethylen, bevorzugt Polystyrol, ausgewählt sind, eingesetzt, wobei diese kovalent gebunden funktionelle Gruppen ausgewählt aus -NH₃⁺, -NRH₂⁺, -NR₃⁺, =NR⁺;-PR₃⁺, wobei es sich bei R um Alkylgruppen mit bevorzugt 1 bis 20 Kohlenstoffatomen handelt, oder andere kationische Gruppen aufweisen. Bevorzugt weisen sie kovalent gebundene funktionelle Gruppen, ausgewählt aus -NH₃⁺, -NRH₂⁺, -NR₃⁺, bevorzugter ausgewählt aus -NH₃⁺, -NR₃⁺, noch bevorzugter -NR₃⁺, auf.

Wenn die Diffusionsbarriere **D** eine kationenleitende Membran ist, handelt es sich insbesondere um eine Membran, die für die vom Salz **S** umfassten Kationen selektiv ist. Noch bevorzugter ist die Diffusionsbarriere **D** eine alkalikationenleitende Membran, noch mehr bevorzugter eine kalium-und/oder natriumionenleitende Membran, am bevorzugtesten eine natriumionenleitende Membran.

Kationenleitende Membranen sind beispielsweise beschrieben auf Seite 181 des Lehrbuchs von Volkmar M. Schmidt Elektrochemische Verfahrenstechnik: Grundlagen, Reaktionstechnik, Prozessoptimierung, 1. Auflage (8. Oktober 2003).

Noch bevorzugter werden demnach als kationenleitende Membran organische Polymere, welche insbesondere aus Polyethylen, Polybenzimidazolen, Polyetherketonen, Polystyrol, Polypropylen oder fluorierten Membranen wie Polyperfluorethylen, bevorzugt Polystyrol, Polyperfluorethylen, ausgewählt sind, eingesetzt, wobei diese kovalent gebunden funktionelle Gruppen ausgewählt aus -SO₃⁻, -COO⁻, -PO₃²⁻, -PO₂H⁻, bevorzugt -SO₃⁻, (beschrieben in DE 10 2010 062 804 A1, US 4,831,146) tragen.

Dies kann zum Beispiel ein sulfoniertes Polyperfluorethylen (Nafion ^{®} mit CAS-Nummer: 31175-20-9) sein. Diese sind dem Fachmann beispielsweise aus der WO 2008/076327 A1, Absatz [058], US 2010/0044242 A1, Absatz [0042] oder der US 2016/ 0204459 A1 bekannt und unter dem Handelsnamen Nafion ^{®}, Aciplex ^{®} F, Flemion ^{®}, Neosepta ^{®}, Ultrex ^{®}, PC-SK ^{®} erwerblich. Neosepta^{®}-Membranen sind beispielsweise beschrieben von S.A. Mareev, D.Yu. Butylskii, N.D. Pismenskaya, C. Larchet, L. Dammak, V.V. Nikonenko, Journal of Membrane Science 2018, 563, 768-776.

Wird eine kationenleitende Membran als Diffusionsbarriere **D** eingesetzt, kann dies beispielsweise ein mit Sulfonsäuregruppen funktionalisiertes Polymer, insbesondere der folgenden Formel **P_{NAFION},** wobei n und m unabhängig voneinander eine ganze Zahl von 1 bis 10⁶, bevorzugter eine ganze Zahl von 10 bis 10⁵, noch bevorzugter eine ganze Zahl von 10² bis 10⁴ ist, sein.

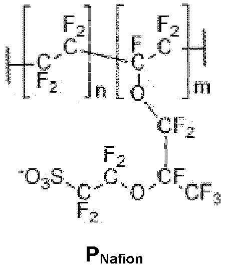

### 4.2.3.2 Zulauf Z_{KM} und Ablauf A_{KM}

Die optionale Mittelkammer **K_{M}** umfasst auch einen Zulauf **Z_{KM}** und einen Ablauf **A_{KM}.** Dies ermöglicht es, dem Innenraum **I_{KM}** der Mittelkammer **K_{M}** Flüssigkeit, wie zum Beispiel die Lösung **L₃,** zuzufügen, und darin befindliche Flüssigkeit, wie zum Beispiel die Lösung **L₃,** in die Anodenkammer **K_{A}** zu überführen.

Der Zulauf **Z_{KM}** und der Ablauf **A_{KM}** können nach dem Fachmann bekannten Verfahren an der Elektrolysezelle **E** angebracht werden, z.B. durch Bohrungen in der Außenwand und entsprechenden Anschlüssen (Ventilen), die die Ein- bzw. Ausleitung von Flüssigkeit vereinfachen. Der Ablauf **A_{KM}** kann auch innerhalb der Elektrolysezelle liegen, beispielsweise als Perforation in der Diffusionsbarriere **D.**

### 4.2.3.3 Verbindung V_{AM}

In der Elektrolysezelle **E** gemäß dem zweiten Aspekt der Erfindung ist der Ablauf **A_{KM}** durch eine Verbindung **V_{AM}** mit dem Zulauf **Z_{KA}** so verbunden, dass durch die Verbindung **V_{AM}** Flüssigkeit aus **I_{KM}** in **I_{KA}** geleitet werden kann,

Die Verbindung **V_{AM}** kann innerhalb der Elektrolysezelle **E** und/oder außerhalb der Elektrolysezelle **E** ausgebildet sein, und ist bevorzugt innerhalb der Elektrolysezelle ausgebildet.
1) Ist die Verbindung **V_{AM}** innerhalb der Elektrolysezelle **E** ausgebildet, wird sie bevorzugt durch mindestens eine Perforation in der Diffusionsbarriere **D** gebildet. Diese Ausführungsform ist insbesondere dann bevorzugt, wenn als Diffusionsbarriere **D** eine nicht ionenspezifische Trennwand, insbesondere ein Metallgewebe oder textiles Gewebe eingesetzt wird. Dieses fungiert als Diffusionsbarriere **D** und weist aufgrund der Webeigenschaften von vorneherein Perforationen und Lücken auf, die als Verbindung **V_{AM}** fungieren.
2) Die folgend beschriebene Ausführungsform ist insbesondere dann bevorzugt, wenn als Diffusionsbarriere **D** eine für spezifische Ionen durchlässige Membran eingesetzt wird: In dieser Ausführungsform ist die Verbindung **V_{AM}** außerhalb der Elektrolysezelle E ausgebildet, wobei sie bevorzugt durch eine außerhalb der Elektrolysezelle **E** verlaufende Verbindung von **A_{KM}** und **Z_{KA}** gebildet wird, insbesondere dadurch, dass vom Innenraum der Mittelkammer **I_{KM}** ein Ablauf **A_{KM}** durch die Außenwand **W_{A},** bevorzugt am Boden der Mittelkammer **K_{M},** wobei noch bevorzugter der Zulauf **Z_{KM}** an der Oberseite der Mittelkammer **K_{M}** ist, gebildet wird, und ein Zulauf **Z_{KA}** in den Innenraum **I_{KA}** der Anodenkammer **K_{A}** durch die Außenwand **W_{A},** bevorzugt am Boden der Anodenkammer **K_{A},** gebildet wird, und diese durch eine Leitung, beispielsweise ein Rohr oder ein Schlauch, der bevorzugt ein Material ausgewählt aus Gummi, Kunststoff umfasst, verbunden sind. Der Ablauf **A_{KA}** ist dann noch bevorzugter an der Oberseite der Anodenkammer **K_{A}** ausgebildet.

"Ablauf **A_{KM}** am Boden der Mittelkammer **K_{M}"** bedeutet, dass der Ablauf **A_{KM}** so an der Elektrolysezelle **E** angebracht ist, dass die Lösung **L₃** die Mittelkammer **K_{M}** gleichgerichtet mit der Schwerkraft verlässt.

"Zulauf **Z_{KA}** am Boden der Anodenkammer **K_{A}"** bedeutet, dass der Zulauf **Z_{KA}** so an der Elektrolysezelle **E** angebracht ist, dass die Lösung **L₃** in die Anodenkammer **K_{A}** entgegen der Schwerkraft eintritt.

"Zulauf **Z_{KM}** an der Oberseite der Mittelkammer **K_{M}"** bedeutet, dass der Zulauf **Z_{KM}** so an der Elektrolysezelle **E** angebracht ist, dass die Lösung **L₃** in die Mittelkammer **K_{M}** gleichgerichtet mit der Schwerkraft eintritt.

"Ablauf **A_{KA}** an der Oberseite der Anodenkammer **K_{A}"** bedeutet, dass der Ablauf **A_{KA}** so an der Elektrolysezelle **E** angebracht ist, dass die Lösung **L₄** die Anodenkammer **K_{A}** entgegen der Schwerkraft verlässt.

Diese Ausführungsform ist dabei besonders vorteilhaft und deshalb bevorzugt, wenn der Ablauf **A_{KM}** durch die Außenwand **W_{A}** am Boden der Mittelkammer **K_{M},** und der Zulauf **Z_{KA}** durch die Außenwand **W_{A}** am Boden der Anodenkammer **K_{A},** gebildet wird. Durch diese Anordnung ist es besonders einfach möglich, in der Anodenkammer **K_{A}** gebildete Gase mit **L₄** aus der Anodenkammer **K_{A}** abzuleiten, um diese dann weiter abzutrennen.

Wenn die Verbindung **V_{AM}** außerhalb der Elektrolysezelle **E** ausgebildet ist, sind insbesondere **Z_{KM}** und **A_{KM}** an gegenüberliegenden Seiten der Außenwand **W_{A}** der Mittelkammer **K_{M}** angeordnet (also z.B. **Z_{KM}** am Boden und **A_{KM}** an der Oberseite der Elektrolysezelle **E** oder umgekehrt) und **Z_{KA}** und **A_{KA}** an gegenüberliegenden Seiten der Außenwand **W_{A}** der Anodenkammer **K_{A}** angeordnet (also **Z_{KA}** am Boden und **A_{KA}** an der Oberseite der Elektrolysezelle E oder umgekehrt), wie es insbesondere in Abbildung 5 A gezeigt ist. Durch diese Geometrie muss **L₃** die beiden Kammern **K_{M}** und **K_{A}** durchströmen. Dabei können **Z_{KA}** und **Z_{KM}** an derselben Seite der Elektrolysezelle **E** ausgebildet sein, wobei dann automatisch auch **A_{KM}** und **A_{KA}** an derselben Seite der Elektrolysezelle **E** ausgebildet sind. Alternativ können **Z_{KA}** und **Z_{KM}** an gegenüberliegenden Seiten der Elektrolysezelle **E** ausgebildet sein, wobei dann automatisch auch **A_{KM}** und **A_{KA}** an gegenüberliegenden Seiten der Elektrolysezelle **E** ausgebildet sind.

3) Wenn die Verbindung **V_{AM}** innerhalb der Elektrolysezelle **E** ausgebildet ist, kann dies insbesondere dadurch gewährleistet werden, dass eine Seite ("Seite A") der Elektrolysezelle **E,** bei der es sich um die Oberseite oder den Boden der Elektrolysezelle **E** handelt, bevorzugt wie in Abbildung 6 B gezeigt um die Oberseite handelt, den Zulauf **Z_{KM}** und den Ablauf **A_{KA}** umfasst und die Diffusionsbarriere **D** ausgehend von dieser Seite ("Seite A") sich in die Elektrolysezelle **E** erstreckt, aber nicht ganz bis zur der der Seite A gegenüberliegenden Seite ("Seite B") der Elektrolysezelle **E,** bei der es dann sich um den Boden bzw. die Oberseite der Elektrolysezelle **E** handelt, reicht und dabei 50 % oder mehr der Höhe der Dreikammerzelle **E,** bevorzugter 60 % bis 99 % der Höhe der Dreikammerzelle **E,** noch bevorzugter 70 % bis 95 % der Höhe der Dreikammerzelle **E,** noch mehr bevorzugter 80 % bis 90 % der Höhe der Dreikammerzelle **E,** noch viel mehr bevorzugter 85 % der Höhe der Dreikammerzelle **E** durchspannt. Dadurch dass die Diffusionsbarriere **D** die Seite B der Dreikammerzelle **E** nicht berührt, entsteht so ein Spalt zwischen Diffusionsbarriere **D** und der Außenwand **W_{A}** der Seite B der Dreikammerzelle **E.** Der Spalt ist dann die Verbindung **V_{AM}.** Durch diese Geometrie muss **L₃** die beiden Kammern **K_{M}** und **K_{A}** vollständig durchströmen.

Diese Ausführungsformen gewährleisten am besten, dass am säureempfindlichen Festelektrolyten die wässrige Salzlösung **L₃** vorbeiströmt, bevor diese mit der anodischen Elektrode **E_{A}** in Kontakt kommt, wodurch es zur Bildung von Säuren kommt.

"Boden der Elektrolysezelle **E"** ist erfindungsgemäß die Seite der Elektrolysezelle **E,** durch die eine Lösung (z.B. **L₃** bei **A_{KM}** in Abbildung 5 A) gleichgerichtet mit der Schwerkraft aus der Elektrolysezelle **E** austritt bzw. die Seite der Elektrolysezelle **E,** durch die eine Lösung (z.B. **L₂** bei **Z_{KK}** in Abbildungen 5 A und 5 B und **L₃** bei **A_{KA}** in Abbildungen 4 A und 4 B) der Elektrolysezelle **E** entgegen der Schwerkraft zugeführt wird.

"Oberseite der Elektrolysezelle **E"** ist erfindungsgemäß die Seite der Elektrolysezelle **E,** durch die eine Lösung (z.B. **L₄** bei **A_{KA}** und **L₁** bei **A_{KK}** in Abbildungen 5 A und 5 B) entgegen der Schwerkraft aus der Elektrolysezelle **E** austritt bzw. die Seite der Elektrolysezelle **E,** durch die eine Lösung (z.B. **L₃** bei **Z_{KM}** in Abbildungen 5 A und 5 B) der Elektrolysezelle **E** gleichgerichtet mit der Schwerkraft zugeführt wird.

### 4.2.4 Anordnung der Trennwand W in der Elektrolysezelle E

Die Trennwand **W** ist in der Elektrolysezelle **E** so angeordnet, dass die die von der Trennwand **W** umfassten alkalikationenleitenden Festelektrolytkeramiken, und bevorzugt auch das Rahmenelement **R,** den Innenraum **I_{KK}** auf der Seite **S_{KK}** über die Oberfläche **O_{KK}** direkt kontaktieren.

Dies bedeutet, dass die Trennwand **W** in der Elektrolysezelle **E** so angeordnet ist, dass, wenn der Innenraum **I_{KK}** auf der Seite **S_{KK}** mit Lösung **L₄** vollständig gefüllt ist, dass die Lösung **L₄** dann über die Oberfläche **O_{KK}** alle von der der Trennwand **W** umfassten alkalikationenleitenden Festelektrolytkeramiken und bevorzugt auch das Rahmenelement **R** über das Teil **R₁** kontaktiert, so dass Ionen (z.B. Alkalimetallionen wie Natrium, Lithium) aus allen AFKs, die von der Trennwand **W** umfasst werden, in die Lösung **L₄** eintreten können.

Zusätzlich ist die Trennwand **W** in den Ausführungsformen, in denen die Elektrolysezelle **E** keine Mittelkammer **K_{M}** umfasst, so in der Elektrolysezelle **E** angeordnet, dass die von der Trennwand **W** umfassten alkalikationenleitenden Festelektrolytkeramiken, und bevorzugt auch das Rahmenelement **R,** den Innenraum **I_{KA}** auf der Seite **S_{A/MK}** über die Oberfläche **O_{A/MK}** direkt kontaktieren.

Dies bedeutet Folgendes: in den Ausführungsformen, in denen die Elektrolysezelle **E** keine Mittelkammer **K_{M}** umfasst, grenzt die Trennwand **W** an den Innenraum **I_{KA}** der Anodenkammer **K_{A}.** In diesen Ausführungsformen ist die Trennwand **W** in der Elektrolysezelle **E** so angeordnet, dass, wenn der Innenraum **I_{KA}** auf der Seite **S_{A/MK}** mit Lösung **L₂** vollständig gefüllt ist, dass die Lösung **L₂** dann über die Oberfläche **O_{A/MK}** alle von der der Trennwand **W** umfassten alkalikationenleitenden Festelektrolytkeramiken und bevorzugt auch das Rahmenelement **R** über das Teil **R₂** kontaktiert, so dass Ionen (z.B. Alkalimetallionen wie Natrium, Lithium) aus der Lösung **L₂** in jede AFK, die von der Trennwand **W** umfasst ist, eintreten können.

Zusätzlich ist die Trennwand **W** in den Fällen, in denen die Elektrolysezelle **E** mindestens eine Mittelkammer **K_{M}** umfasst, so in der Elektrolysezelle **E** angeordnet, dass die von der Trennwand **W** umfassten alkalikationenleitenden Festelektrolytkeramiken, und bevorzugt auch das Rahmenelement **R,** den Innenraum **I_{KM}** auf der Seite **S_{A/MK}** über die Oberfläche **O_{A/MK}** direkt kontaktieren.

Dies bedeutet Folgendes: in den Ausführungsformen, in denen die Elektrolysezelle **E** mindestens eine Mittelkammer **K_{M}** umfasst, grenzt die Trennwand **W** an den Innenraum **I_{KM}** der Mittelkammer **K_{M}.** In diesen Ausführungsformen ist die Trennwand **W** in der Elektrolysezelle **E** so angeordnet, dass, wenn der Innenraum **I_{KM}** auf der Seite **S_{A/MK}** mit Lösung **L₂** vollständig gefüllt ist, dass die Lösung **L₂** dann über die Oberfläche **O_{A/MK}** alle von der der Trennwand **W** umfassten alkalikationenleitenden Festelektrolytkeramiken und bevorzugt auch das Rahmenelement **R** über das Teil **R₂** kontaktiert, so dass Ionen (z.B. Alkalimetallionen wie Natrium, Lithium) aus der Lösung **L₂** in jede AFK, die von der Trennwand **W** umfasst ist, eintreten können.

In einer bevorzugten Ausführungsform der Elektrolysezelle **E** gemäß dem zweiten Aspekt der Erfindung kontaktieren mindestens 50 %, insbesondere mindestens 70 %, bevorzugt mindestes 90 %, am bevorzugtesten 100 % des Teils der Oberfläche **O_{KK},** der durch AFKs gebildet wird, den Innenraum **I_{KK}.**

In einer bevorzugten Ausführungsform der Elektrolysezelle **E** ohne Mittelkammer gemäß dem zweiten Aspekt der Erfindung kontaktieren mindestens 50 %, insbesondere mindestens 70 %, bevorzugt mindestes 90 %, am bevorzugtesten 100 % des Teils der Oberfläche **O_{A/MK},** der durch AFKs gebildet wird, den Innenraum **I_{KA}.**

In einer bevorzugten Ausführungsform der Elektrolysezelle **E** mit mindestens einer Mittelkammer gemäß dem zweiten Aspekt der Erfindung kontaktieren mindestens 50 %, insbesondere mindestens 70 %, bevorzugt mindestes 90 %, am bevorzugtesten 100 % des Teils der Oberfläche **O_{A/MK},** der durch AFKs gebildet wird, den Innenraum **I_{KM}.**

### 4.3 Erfindungsgemäßes Verfahren

Die vorliegende Erfindung betrifft in einem dritten Aspekt ein Verfahren zur Herstellung einer Lösung L, eines Alkalimetallalkoholats XOR im Alkohol ROH, wobei X ein Alkalimetallkation ist und R ein Alkylrest mit 1 bis 4 Kohlenstoffatomen ist. Das Verfahren gemäß dem dritten Aspekt der Erfindung wird in einer Elektrolysezelle E gemäß dem zweiten Aspekt der Erfindung durchgeführt.

Bevorzugt ist X aus der Gruppe bestehend aus Li⁺, K⁺, Na⁺, bevorzugter aus der Gruppe bestehend aus K⁺, Na⁺ ausgewählt. Am bevorzugtesten ist X = Na⁺.

R ist bevorzugt aus der Gruppe bestehend aus n-Propyl, iso-Propyl, Ethyl, Methyl ausgewählt, bevorzugter aus der Gruppe bestehend aus Ethyl, Methyl ausgewählt. Am bevorzugtesten ist R Methyl.

### 4.3.1 Erfindungsgemäßes Verfahren in einer Elektrolysezelle E ohne Mittelkammer K_{M}

In den Fällen, in denen die Elektrolysezelle **E** keine Mittelkammer **K_{M}** umfasst, werden die gleichzeitig ablaufenden Schritt (α1), (α2), (α3) durchgeführt.

### 4.3.1.1 Schritt (α1)

Im Schritt (α1) wird eine Lösung **L₂** umfassend den Alkohol ROH, bevorzugt umfassend ein Alkalialkoholat XOR und Alkohol ROH, durch **K_{K}** geleitet.

Die Lösung **L₂** ist bevorzugt frei von Wasser. "Frei von Wasser" bedeutet erfindungsgemäß, dass das Gewicht des Wassers in der Lösung **L₂** bezogen auf das Gewichts des Alkohols ROH in der Lösung **L₂** (Massenverhältnis) ≤ 1 : 10, bevorzugter ≤ 1 : 20, noch bevorzugter ≤ 1 : 100, noch bevorzugter ≤ 0.5 : 100 ist.

Umfasst die Lösung **L₂** XOR, so liegt der Massenanteil von XOR in der Lösung **L₂,** bezogen auf die gesamte Lösung **L₂,** insbesondere bei > 0 bis 30 Gew.-%, bevorzugt bei 5 bis 20 Gew.-%, noch bevorzugter bei 10 bis 20 Gew.-%, noch bevorzugter bei 10 bis 15 Gew.-%, am bevorzugtesten bei 13 bis 14 Gew.-%, am allerbevorzugtesten bei 13 Gew.-%.

Umfasst die Lösung **L₂** XOR, so liegt in der Lösung **L₂** insbesondere das Massenverhältnis von XOR zu Alkohol ROH im Bereich 1 : 100 bis 1 : 5, bevorzugter im Bereich 1 : 25 bis 3 : 20, noch bevorzugter im Bereich 1 : 12 bis 1 : 8, noch bevorzugter bei 1 : 10.

### 4.3.1.2 Schritt (α2)

In Schritt (α2) wird eine neutrale oder alkalische, wässrige Lösung **L₃** eines Salzes **S** umfassend X als Kation durch **K_{A}** geleitet.

Das Salz S ist bevorzugt ein Halogenid, Sulfat, Sulfit, Nitrat, Hydrogencarbonat oder Carbonat von X, noch bevorzugter ein Halogenid.

Halogenide sind Fluoride, Chloride, Bromide, Jodide. Das bevorzugteste Halogenid ist Chlorid.

Der pH der wässrigen Lösung **L₃** ist dabei ≥ 7.0, bevorzugt im Bereich 7 bis 12, bevorzugter im Bereich 8 bis 11, noch bevorzugter 10 bis 11, am bevorzugtesten bei 10.5.

Der Massenanteil des Salzes **S** in der Lösung **L₃** liegt dabei bevorzugt im Bereich > 0 bis 20 Gew.-%, bevorzugt 1 bis 20 Gew.-%, bevorzugter bei 5 bis 20 Gew.-%, noch bevorzugter bei 10 bis 20 Gew.-%, am bevorzugtesten bei 20 Gew.-%, bezogen auf die gesamte Lösung **L₃.**

### 4.3.1.3 Schritt (α3)

Im Schritt (α3) wird dann eine Spannung zwischen **E_{A}** und **E_{K}** angelegt.

Dadurch kommt es zu einem Stromtransport von der Ladungsquelle zur Anode, zu einem Ladungstransport über Ionen zur Kathode und schließlich zu einem Stromtransport zurück zur Ladungsquelle. Die Ladungsquelle ist dem Fachmann bekannt und ist typischerweise ein Gleichrichter, der Wechselstrom in Gleichstrom umwandelt und über Spannungsumwandler bestimmte Spannungen erzeugen kann.

Dies hat wiederum folgende Konsequenzen:
am Ablauf **A_{KK}** wird die Lösung **L₁** erhalten, wobei die Konzentration von XOR in **L₁** höher ist als in **L₂,**
am Ablauf **A_{KA}** wird eine wässrige Lösung **L₄** von **S** erhalten, wobei die Konzentration von **S** in **L₄** geringer ist als in **L₃.**

Im Schritt (α3) des Verfahrens gemäß dem dritten Aspekt der Erfindung wird insbesondere eine solche Spannung angelegt, dass so ein Strom fließt, so dass die Stromdichte (= Verhältnis des Stroms, der zur Elektrolysezelle fließt, zur Fläche des Festelektrolyten, die den in der Anodenkammer **K_{A}** befindlichen Anolyten kontaktiert) im Bereich von 10 bis 8000 A/ m² liegt, bevorzugter im Bereich von 100 bis 2000 A/ m² liegt, noch bevorzugter im Bereich von 300 bis 800 A/ m², noch bevorzugter bei 494 A/ m² liegt. Dies kann vom Fachmann standardmäßig bestimmt werden. Die Fläche des Festelektrolyten, die den in der Anodenkammer **K_{A}** befindlichen Anolyten kontaktiert beträgt insbesondere 0.00001 bis 10 m², bevorzugt 0.0001 bis 2.5 m², bevorzugter 0.0002 bis 0.15 m², noch bevorzugter 2.83 cm².

Es versteht sich von selbst, dass der Schritt (α3) des Verfahrens gemäß dem dritten Aspekt der Erfindung dann durchgeführt wird, wenn die Kammer **K_{A}** mindestens teilweise mit **L₃** beladen ist und **K_{K}** mit **L₂** mindestens teilweise beladen ist, so dass sowohl **L₃** als auch **L₂** die von der Trennwand **W** umfassten AFKs kontaktieren und insbesondere auch das Rahmenelement **R** kontaktieren.

Die Tatsache, dass in Schritt (α3) ein Ladungstransport zwischen **E_{A}** und **E_{K}** stattfindet, impliziert, dass **K_{K}** und **K_{A}** gleichzeitig mit **L₂** bzw. **L₃** so beladen sind, dass sie die Elektroden **E_{A}** und **E_{K}** soweit bedecken, dass der Stromkreislauf geschlossen ist.

Das ist insbesondere dann der Fall, wenn kontinuierlich ein Flüssigkeitsstrom von **L₃** durch **K_{A}** und ein Flüssigkeitsstrom von **L₂** durch **K_{K}** geleitet wird und der Flüssigkeitsstrom von **L₃** die Elektrode **E_{A}** und der Flüssigkeitsstrom von **L₂** die Elektrode **E_{K}** mindestens teilweise, bevorzugt vollständig bedeckt.

In einer weiteren bevorzugten Ausführungsform wird das Verfahren gemäß dem dritten Aspekt der Erfindung kontinuierlich durchgeführt, also Schritt (α1) und Schritt (α2) kontinuierlich durchgeführt und dabei gemäß Schritt (α3) Spannung angelegt.

Nach Durchführung des Schrittes (α3) wird am Ablauf **A_{KK}** die Lösung **L₁** erhalten, wobei die Konzentration von XOR in **L₁** höher ist als in **L₂.** Wenn **L₂** schon XOR umfasste, ist die Konzentration von XOR in **L₁** bevorzugt um das 1.01 bis 2.2-fache, bevorzugter um das 1.04 bis 1.8-fache, noch bevorzugter um das 1.077 bis 1.4-fache, noch mehr bevorzugter um das 1.077 bis 1.08-fache höher als in **L₂,** am bevorzugtesten um das 1.077-fache höher als in **L₂,** wobei noch bevorzugter dabei der Massenanteil von XOR in **L₁** und in **L₂** im Bereich 10 bis 20 Gew.-%, noch mehr bevorzugter 13 bis 14 Gew.-% liegt.

Am Ablauf **A_{KA}** wird eine wässrige Lösung **L₄** von **S** erhalten, wobei die Konzentration von **S** in **L₄** geringer ist als in **L₃.**

Die Konzentration des Kations X in der wässrigen Lösung **L₃** liegt bevorzugt im Bereich 3.5 bis 5 mol/l, bevorzugter 4 mol/l. Die Konzentration des Kations X in der wässrigen Lösung **L₄** ist bevorzugter 0.5 mol/l geringer als jene der jeweils eingesetzten wässrigen Lösung **L₃.**

Insbesondere werden die Schritte (α1) bis (α3) des Verfahrens gemäß dem dritten Aspekt der Erfindung bei einer Temperatur von 20 °C bis 70 °C, bevorzugt 35 °C bis 65 °C, bevorzugter 35 °C bis 60 °C, noch bevorzugter 35 °C bis 50 °C und einem Druck von 0.5 bar bis 1.5 bar, bevorzugt 0.9 bar bis 1.1 bar, bevorzugter 1.0 bar durchgeführt.

Bei der Durchführung der Schritte (α1) bis (α3) des Verfahrens gemäß dem dritten Aspekt der Erfindung entsteht in der Kathodenkammer **K_{K}** typischerweise Wasserstoff, der über den Ablauf **A_{KK}** aus der Zelle zusammen mit der Lösung **L₁** abgeführt werden kann. Die Mischung aus Wasserstoff und Lösung **L₁** kann dann in einer besonderen Ausführungsform der vorliegenden Erfindung nach dem Fachmann bekannten Verfahren aufgetrennt werden. In der Anodenkammer **K_{A},** wenn es sich bei der eingesetzten Alkalimetallverbindung um ein Halogenid, insbesondere Chlorid handelt, kann Chlor oder ein anderes Halogengas entstehen, welches über den Ablauf **A_{KK}** aus der Zelle zusammen mit der Lösung **L₄** abgeführt werden kann. Daneben kann auch Sauerstoff oder/und Kohlendioxid entstehen, was ebenso abgeführt werden kann. Die Mischung aus Chlor, Sauerstoff und/oder COz und Lösung **L₄** kann dann in einer besonderen Ausführungsform der vorliegenden Erfindung nach dem Fachmann bekannten Verfahren aufgetrennt werden. Genauso kann dann nach Abtrennung der Gase Chlor, Sauerstoff und/oder COz von der Lösung **L₄** diese nach dem Fachmann bekannten Verfahren voneinander abgetrennt werden.

### 4.3.2 Erfindungsgemäßes Verfahren in einer Elektrolysezelle E mit Mittelkammer K_{M}

In den Fällen, in denen die Elektrolysezelle **E** mindestens eine Mittelkammer **K_{M}** umfasst, werden die gleichzeitig ablaufenden Schritte (β1), (β2), (β3) durchgeführt.

Es ist bevorzugt, dass die Elektrolysezelle E mindestens eine Mittelkammer **K_{M}** umfasst, und dann die gleichzeitig ablaufenden Schritte (β1), (β2), (β3) durchgeführt werden.

### 4.3.2.1 Schritt (β1)

Im Schritt (β1) wird eine Lösung **L₂** umfassend den Alkohol ROH, bevorzugt umfassend ein Alkalialkoholat XOR und Alkohol ROH, durch **K_{K}** geleitet.

Die Lösung **L₂** ist bevorzugt frei von Wasser. "Frei von Wasser" bedeutet erfindungsgemäß, dass das Gewicht des Wassers in der Lösung **L₂** bezogen auf das Gewichts des Alkohols ROH in der Lösung **L₂** (Massenverhältnis) ≤ 1 : 10, bevorzugter ≤ 1 : 20, noch bevorzugter ≤ 1 : 100, noch bevorzugter ≤ 0.5 : 100 ist.

Umfasst die Lösung **L₂** XOR, so liegt der Massenanteil von XOR in der Lösung **L₂,** bezogen auf die gesamte Lösung **L₂,** insbesondere bei > 0 bis 30 Gew.-%, bevorzugt bei 5 bis 20 Gew.-%, noch bevorzugter bei 10 bis 20 Gew.-%, noch bevorzugter bei 10 bis 15 Gew.-%, am bevorzugtesten bei 13 bis 14 Gew.-%, am allerbevorzugtesten bei 13 Gew.-%.

Umfasst die Lösung **L₂** XOR, so liegt in der Lösung **L₂** insbesondere das Massenverhältnis von XOR zu Alkohol ROH im Bereich 1 : 100 bis 1 : 5, bevorzugter im Bereich 1 : 25 bis 3 : 20, noch bevorzugter im Bereich 1 : 12 bis 1 : 8, noch bevorzugter bei 1 : 10.

### 4.3.2.2 Schritt (β2)

In Schritt (β2) wird eine neutrale oder alkalische, wässrige Lösung **L₃** eines Salzes **S** umfassend X als Kation durch **K_{M},** dann über **V_{AM},** dann durch **K_{A}** geleitet.

Das Salz S ist bevorzugt ein Halogenid, Sulfat, Sulfit, Nitrat, Hydrogencarbonat oder Carbonat von X, noch bevorzugter ein Halogenid.

Halogenide sind Fluoride, Chloride, Bromide, Jodide. Das bevorzugteste Halogenid ist Chlorid.

Der pH der wässrigen Lösung **L₃** ist dabei ≥ 7.0, bevorzugt im Bereich 7 bis 12, bevorzugter im Bereich 8 bis 11, noch bevorzugter 10 bis 11, am bevorzugtesten bei 10.5.

Der Massenanteil des Salzes **S** in der Lösung **L₃** liegt dabei bevorzugt im Bereich > 0 bis 20 Gew.-%, bevorzugt 1 bis 20 Gew.-%, bevorzugter bei 5 bis 20 Gew.-%, noch bevorzugter bei 10 bis 20 Gew.-%, am bevorzugtesten bei 20 Gew.-%, bezogen auf die gesamte Lösung **L₃.**

### 4.3.2.3 Schritt (β3)

Im Schritt (β3) wird dann eine Spannung zwischen **E_{A}** und **E_{K}** angelegt.

Dadurch kommt es zu einem Stromtransport von der Ladungsquelle zur Anode, zu einem Ladungstransport über Ionen zur Kathode und schließlich zu einem Stromtransport zurück zur Ladungsquelle. Die Ladungsquelle ist dem Fachmann bekannt und ist typischerweise ein Gleichrichter, der Wechselstrom in Gleichstrom umwandelt und über Spannungsumwandler bestimmte Spannungen erzeugen kann.

Dies hat wiederum folgende Konsequenzen:
am Ablauf **A_{KK}** wird die Lösung **L₁** erhalten, wobei die Konzentration von XOR in **L₁** höher ist als in **L₂,**
am Ablauf **A_{KA}** wird eine wässrige Lösung **L₄** von **S** erhalten, wobei die Konzentration von **S** in **L₄** geringer ist als in **L₃.**

Im Schritt (β3) des Verfahrens gemäß dem dritten Aspekt der Erfindung wird insbesondere eine solche Spannung angelegt, dass so ein Strom fließt, so dass die Stromdichte (= Verhältnis des Stroms, der zur Elektrolysezelle fließt, zur Fläche des Festelektrolyten, die den in der Mittelkammer **K_{M}** befindlichen Anolyten kontaktiert) im Bereich von 10 bis 8000 A/ m² liegt, bevorzugter im Bereich von 100 bis 2000 A/ m² liegt, noch bevorzugter im Bereich von 300 bis 800 A/ m², noch bevorzugter bei 494 A/ m² liegt. Dies kann vom Fachmann standardmäßig bestimmt werden. Die Fläche des Festelektrolyten, die den in der Mittelkammer **K_{M}** befindlichen Anolyten kontaktiert beträgt insbesondere 0.00001 bis 10 m², bevorzugt 0.0001 bis 2.5 m², bevorzugter 0.0002 bis 0.15 m², noch bevorzugter 2.83 cm².

Es versteht sich von selbst, dass der Schritt (β3) des Verfahrens gemäß dem dritten Aspekt der Erfindung dann durchgeführt wird, wenn beide Kammern **K_{M}** und **K_{A}** mindestens teilweise mit **L₃** beladen sind und **K_{K}** mit **L₂** mindestens teilweise beladen ist, so dass sowohl **L₃** als auch **L₂** die von der Trennwand **W** umfassten Festelektrolyten kontaktieren und insbesondere auch das Rahmenelement **R** kontaktieren.

Die Tatsache, dass in Schritt (β3) ein Ladungstransport zwischen **E_{A}** und **E_{K}** stattfindet, impliziert, dass **K_{K}, K_{M}** und **K_{A}** gleichzeitig mit **L₂** bzw. **L₃** so beladen sind, dass sie die Elektroden **E_{A}** und **E_{K}** soweit bedecken, dass der Stromkreislauf geschlossen ist.

Das ist insbesondere dann der Fall, wenn kontinuierlich ein Flüssigkeitsstrom von **L₃** durch **K_{M}, V_{AM}** und **K_{A}** und ein Flüssigkeitsstrom von **L₂** durch **K_{K}** geleitet wird und der Flüssigkeitsstrom von **L₃** die Elektrode **E_{A}** und der Flüssigkeitsstrom von **L₂** die Elektrode **E_{K}** mindestens teilweise, bevorzugt vollständig bedeckt.

In einer weiteren bevorzugten Ausführungsform wird das Verfahren gemäß dem zweiten Aspekt der Erfindung kontinuierlich durchgeführt, also Schritt (β1) und Schritt (β2) kontinuierlich durchgeführt und dabei gemäß Schritt (β3) Spannung angelegt.

Nach Durchführung des Schrittes (β3) wird am Ablauf **A_{KK}** die Lösung **L₁** erhalten, wobei die Konzentration von XOR in **L₁** höher ist als in **L₂.** Wenn **L₂** schon XOR umfasste, ist die Konzentration von XOR in **L₁** bevorzugt um das 1.01 bis 2.2-fache, bevorzugter um das 1.04 bis 1.8-fache, noch bevorzugter um das 1.077 bis 1.4-fache, noch mehr bevorzugter um das 1.077 bis 1.08-fache höher als in **L₂,** am bevorzugtesten um das 1.077-fache höher als in **L₂,** wobei noch bevorzugter dabei der Massenanteil von XOR in **L₁** und in **L₂** im Bereich 10 bis 20 Gew.-%, noch mehr bevorzugter 13 bis 14 Gew.-% liegt.

Am Ablauf **A_{KA}** wird eine wässrige Lösung **L₄** von **S** erhalten, wobei die Konzentration von **S** in **L₄** geringer ist als in **L₃.**

Die Konzentration des Kations X in der wässrigen Lösung **L₃** liegt bevorzugt im Bereich 3.5 bis 5 mol/l, bevorzugter 4 mol/l. Die Konzentration des Kations X in der wässrigen Lösung **L₄** ist bevorzugter 0.5 mol/l geringer als jene der jeweils eingesetzten wässrigen Lösung **L₃.**

Insbesondere werden die Schritte (β1) bis (β3) des Verfahrens gemäß dem dritten Aspekt der Erfindung bei einer Temperatur von 20 °C bis 70 °C, bevorzugt 35 °C bis 65 °C, bevorzugter 35 °C bis 60 °C, noch bevorzugter 35 °C bis 50 °C und einem Druck von 0.5 bar bis 1.5 bar, bevorzugt 0.9 bar bis 1.1 bar, bevorzugter 1.0 bar durchgeführt.

Bei der Durchführung der Schritte (β1) bis (β3) des Verfahrens gemäß dem dritten Aspekt der Erfindung entsteht in der Kathodenkammer **K_{K}** typischerweise Wasserstoff, der über den Ablauf **A_{KK}** aus der Zelle zusammen mit der Lösung **L₁** abgeführt werden kann. Die Mischung aus Wasserstoff und Lösung **L₁** kann dann in einer besonderen Ausführungsform der vorliegenden Erfindung nach dem Fachmann bekannten Verfahren aufgetrennt werden. In der Anodenkammer **K_{A},** wenn es sich bei der eingesetzten Alkalimetallverbindung um ein Halogenid, insbesondere Chlorid handelt, kann Chlor oder ein anderes Halogengas entstehen, welches über den Ablauf **A_{KK}** aus der Zelle zusammen mit der Lösung **L₄** abgeführt werden kann. Daneben kann auch Sauerstoff oder/und Kohlendioxid entstehen, was ebenso abgeführt werden kann. Die Mischung aus Chlor, Sauerstoff und/oder COz und Lösung **L₄** kann dann in einer besonderen Ausführungsform der vorliegenden Erfindung nach dem Fachmann bekannten Verfahren aufgetrennt werden. Genauso kann dann nach Abtrennung der Gase Chlor, Sauerstoff und/oder COz von der Lösung **L₄** diese nach dem Fachmann bekannten Verfahren voneinander abgetrennt werden.

### 4.3.2.4 Zusätzliche Vorteile der Schritte (β1) bis (β3)

Diese Durchführung der Schritte (β1) bis (β3) bringen noch weitere überraschende Vorteile, die im Lichte des Standes der Technik nicht zu erwarten waren. Durch die Schritte (β1) bis (β3) des erfindungsgemäßen Verfahrens wird der säurelabile Feststoffelektrolyt vor Korrosion geschützt, ohne dass dabei wie im Stand der Technik Alkoholatlösung aus dem Kathodenraum als Pufferlösung geopfert werden muss. Damit ist das erfindungsgemäße Verfahren effizienter als die in WO 2008/076327 A1 beschriebene Vorgehensweise, in der die Produktlösung für die Mittelkammer verwendet wird, was den Gesamtumsatz schmälert.

### 5. Beispiele

### 5.1 Vergleichsbeispiel 1

Natriummethylat (NM) wurde über einen kathodischen Prozess hergestellt, wobei in der Anodenkammer 20 Gew.-%-ige NaCl-Lösung (in Wasser) und in der Kathodenkammer 10 Gew.-%-ige methanolische NM-Lösung zugeführt werden. Dabei bestand die Elektrolysezelle aus drei Kammern, welcher jenen in Abbildung 1 B gezeigten entsprach. Die Verbindung zwischen Mittel- und Anodenkammer wurde durch einen Schlauch, der am Boden der Elektrolysezelle angebracht war, hergestellt. Die Anodenkammer und mittlere Kammer waren durch eine 2.83 cm² Anionenaustauschermembran (Tokuyama AMX, Ammoniumgruppen auf Polymer) getrennt. Kathoden und Mittelkammer waren durch eine Keramik vom Typ NaSICON mit einer Fläche von 2.83 cm² getrennt. Die Keramik hatte eine chemische Zusammensetzung der Formel Na_{3.4}Zr_{2.0}Si_{2.4}P_{0.6}O₁₂.

Der Anolyt wurde durch die mittlere Kammer in die Anodenkammer überführt. Die Durchflussrate des Anolyten betrug 1 l/h, jene des Katholyten betrug 90 ml/h, und es wurde ein Strom von 0.14 A angelegt. Die Temperatur betrug 35 °C. Die Elektrolyse wurde für 500 Stunden durchgeführt, wobei die Spannung konstant bei 5 V verblieb.

Es wurde beobachtet, dass sich in der Mittelkammer über längere Zeit ein pH-Gradient ausbildete, was auf die Wanderung der Ionen zu den Elektroden im Zuge der Elektrolyse und die Ausbreitung der an der Anode in Folgereaktionen gebildeten Protonen zurückzuführen ist. Diese lokale Erhöhung des pH-Wertes ist unerwünscht, da er den Festelektrolyten angreifen kann und gerade bei sehr langen Laufzeiten zur Korrosion und Bruch des Festelektrolyten führen kann.

Daneben kommt es bei wiederholtem Anfahren und Abfahren der Elektrolysezelle aufgrund der Aufheiz- und Abkühleffekten zur Ausdehnung bzw. Schrumpfung der NaSICON-Keramik. Daneben kann sich die NaSICON-Membran in der Zelle verlagern. Dies ist problematisch, da dies die Tendenz der Keramik, zu brechen, verstärkt und zu Leckage von Elektrolyt aus der Mittelkammer in die Kathodenkammer führen kann, was das Produkt der Elektrolyse verwässert. Daneben kann dies zu Undichtigkeiten in der Außenwand der Zelle führen, die zur Leckage von Elektrolyt nach außen führen.

### 5.2 Vergleichsbeispiel 2

Das Vergleichsbeispiel 1 wurde mit einer Zweikammerzelle umfassend nur eine Anoden- und eine Kathodenkammer, wobei die Anodenkammer durch die Keramik vom Typ NaSICON von der Kathodenkammer getrennt war, wiederholt (Abbildung 1 A) Somit enthielt diese Elektrolysezelle keine Mittelkammer. Dies schlägt sich in einer noch schnelleren Korrosion der Keramik im Vergleich zum Vergleichsbeispiel 1 nieder, was zu einem schnellen Anstieg der Spannungskurve führt. Bei einem Startwert der Spannung von < 5 V steigt diese innerhalb von 100 Stunden auf > 20 V.

### 5.3 Erfindungsgemäßes Beispiel 1

Vergleichsbeispiel 1 wird wiederholt, wobei eine Elektrolysezelle gemäß Abbildung 5 A eingesetzt wird, in der eine Trennwand umfassend zwei NaSICON-Keramiken in einem Rahmen eingesetzt und mit Schrauben befestigt sind.

Durch diese Anordnung wird das Ausmaß der Ausdehnungs- und Schrumpfprozesse der Keramik reduziert, was zur Haltbarkeit der Keramik beiträgt und eine sauberere Produktlösung ergibt, da die Leckage unterbunden wird.

### 5.4 Vergleichsbeispiel 3

Vergleichsbeispiel 2 wird wiederholt, wobei eine Elektrolysezelle gemäß Abbildung 5 B eingesetzt wurde, in der eine Trennwand umfassend vier NaSICON-Keramiken in einem Rahmen eingesetzt und mit Haken befestigt sind, wie in Abbildung 7 A gezeigt. Der Unterschied ist allerdings, dass das Befestigungselement **B_{T}** <92> (im Querschnitt <166> in Abbildung 5 B) weggelassen wird.

Durch diese Anordnung wird das Ausmaß der Ausdehnungs- und Schrumpfprozesse der Keramik reduziert, was zur Haltbarkeit der Keramik beiträgt und eine sauberere Produktlösung ergibt, da die Leckage unterbunden wird. Allerdings wird beobachtet, dass der Rahmen **R** im Bereich des Trennelements **R_{T}** flexibel ist und so die Stabilität der Trennwand **W** in diesem Bereich gering ist.

### 5.5 Erfindungsgemäßes Beispiel 2

Das Vergleichsbeispiel 3 wird wiederholt, wobei ein Befestigungselement **B_{T}** <92> (ineinander greifende Haken) im Bereich des Trennelements **R_{T}** angebracht wird. Dadurch werden Kompressionskräfte über die gesamte Oberfläche der jeweiligen Seite der Trennwand verteilt, was die Stabilität der Trennwand erhöht.

### 5.6 Ergebnis

Die Abmilderung der Spannungen innerhalb der Festelektrolytkeramiken bei den sich aus den wiederholenden Elektrolysezyklen ergebenden Ausdehnungs- und Schrumpfungsprozessen führen zu einer Verlängerung der Lebensdauer der Elektrolysekammer. In der Ausführung gemäß erfindungsgemäßen Beispielen 1 und 2 werden diese Effekte reduziert, was die Stabilität des Festelektrolyten erhöht.

Daneben wird gegenüber Vergleichsbeispiel 3 zusätzlich die Stabilität der Trennwand **W** durch gleichmäßige Verteilung der Kompressionskräfte, die das Rahmenelement auf die Keramiken in der Trennwand ausübt, erhöht, in dem ein Befestigungselement **B_{T}** im Bereich des Trennelements **R_{T}** angebracht wird.

Durch die Verwendung einer erfindungsgemäßen Dreikammerzelle im erfindungsgemäßen Verfahren wird außerdem die Korrosion des Festelektrolyten verhindert, wobei gleichzeitig kein Alkalimetallalkoholatprodukt für die Mittelkammer geopfert werden muss und die Spannung konstant gehalten wird. Diese Vorteile, die schon aus dem Vergleich der beiden Vergleichsbeispiele 1 und 2 ersichtlich sind, unterstreichen den überraschenden Effekt einer erfindungsgemäßen Elektrolysezelle umfassend mindestens eine Mittelkammer und des in ihr durchgeführten Verfahrens.

### 6. Referenzzeichen in den Abbildungen

| | | |
|---|---|---|
| Elektrolysezelle | **E** | <1> |
| Anodenkammer | **K_{A}** | <11> |
| Zulauf | **Z_{KA}** | <110> |
| Ablauf | **A_{KA}** | <111> |
| Innenraum | **I_{KA}** | <112> |
| anodische Elektrode | **E_{A}** | <113> |
| Kathodenkammer | **K_{K}** | <12> |
| Zulauf | **Z_{KK}** | <120> |
| Ablauf | **A_{KK}** | <121> |
| Innenraum | **I_{KK}** | <122> |
| kathodische Elektrode | **E_{K}** | <123> |
| Mittelkammer | **K_{M}** | <13> |
| Zulauf | **Z_{KM}** | <130> |
| Ablauf | **A_{KM}** | <131> |
| Innenraum | **I_{KM}** | <132> |
| Diffusionsbarriere | **D** | <14> |
| Verbindung | **V_{AM}** | <15> |
| Trennwand | **W** | <16> |
| Seite | **S_{KK}** | <161> |
| Seite | **S_{A/MK}** | <162> |
| Oberfläche | **O_{KK}** | <163> |
| Oberfläche | **O_{A/MK}** | <164> |
| Querschnitt durch Randelement **R_{R}** | **Q_{RR}** | <165> |
| Querschnitt durch Trennelement **R_{T}** | **Q_{RT}** | <166> |
| Festelektrolytkeramik | **F_{A}** | <18> |
| Festelektrolytkeramik | **F_{B}** | <19> |
| Festelektrolytkeramik | **F_{c}** | <28> |
| Festelektrolytkeramik | **F_{D}** | <29> |
| Festelektrolytkeramiken | **F_{E}, F_{F}, F_{G}, F_{H}, F_{I}** | <30>, <31>, <32>, <33>, <34> |
| Rahmenelement | **R** | <2> |
| Randelement | **R_{R}** | <20> |
| Trennelement | **R_{T}** | <17> |
| Rahmenteil | **R₁** | <201> |
| Rahmenteil | **R₂** | <202> |
| Dichtung | **Di** | <40> |
| Scharnier | | <50> |
| Auswölbung ("Hasenohr") | | <60> |
| Zusätzliches Loch | | <61> |
| Außenwand | **W_{A}** | <80> |
| Befestigungselement | **B_{R}** | <91> |
| Befestigungselement | **B_{T}** | <92> |
| Haken | **B_{H}** | <93> |
| Alkalimetallalkoholats XOR im Alkohol ROH | **L₁** | <21> |
| Lösung umfassend den Alkohol ROH | **L₂** | <22> |
| neutrale oder alkalische, wässrige Lösung eines Salzes S umfassend X als Kation | **L₃** | <23> |
| wässrige Lösung von **S,** wobei **[S]_{L4}** < **[S]_{L3}.** | **L₄** | <24> |

## Patentansprüche

1. Trennwand **W** <16>, welche eine Seite **S_{KK}** <161 > mit der Oberfläche **O_{KK}** <163> und eine der Seite **S_{KK}** <161 > gegenüberliegende Seite **S_{A/MK}** <162> mit der Oberfläche **O_{A/MK}** <164> umfasst,
wobei die Trennwand **W** <16> ein Rahmenelement **R** <2> aus zwei einander gegenüberliegenden Teilen **R₁** <201> und **R₂** <202> umfasst, zwischen denen mindestens zwei alkalikationenleitende Festelektrolytkeramiken **F_{A}** <18> und **F_{B}** <19> angeordnet sind,
wobei **R₁** <201> über die Oberfläche **O_{KK}** <163> direkt kontaktierbar ist,
wobei **R₂** <202> über die Oberfläche **O_{A/MK}** <164> direkt kontaktierbar ist,
wobei das Rahmenelement **R** <2> ein Randelement **R_{R}** <20> und ein Trennelement **R_{T}** <17> ausbildet,
wobei das Randelement **R_{R}** <20> die Oberflächen **O_{KK}** <163> und **O_{A/MK}** <164> mindestens teilweise begrenzt,
und wobei das Trennelement **R_{T}** <17> zwischen den von der Trennwand **W** <16> umfassten alkalikationenleitende Festelektrolytkeramiken liegt und diese voneinander abtrennt,
so dass die von der Trennwand **W** <16> umfassten alkalikationenleitenden Festelektrolytkeramiken sowohl über die Oberfläche **O_{KK}** <163> als auch über die Oberfläche **O_{A/MK}** <164> direkt kontaktierbar sind,
**dadurch gekennzeichnet, dass**
**R₁** <201> und **R₂** <202> durch mindestens ein Befestigungselement **B_{R}** <91> am Randelement **R_{R}** <20> aneinander befestigt sind,
und **R₁** <201> und **R₂** <202> durch mindestens ein Befestigungselement **B_{T}** <92> am Trennelement **R_{T}** <17> aneinander befestigt sind.

2. Trennwand **W** <16> nach Anspruch 1, wobei das mindestens eine Befestigungselement **B_{R}** <91> und das mindestens eine Befestigungselement **B_{T}** <92> einstückig mit mindestens einem der Teile **R₁** <201> und **R₂** <202> ausgebildet sind.

3. Trennwand **W** <16> nach Anspruch 1 oder 2, wobei das mindestens eine Befestigungselement **B_{R}** <91> und das mindestens eine Befestigungselement **B_{T}** <92> jeweils in Form von ineinander greifenden Haken **B_{H}** <93> ausgebildet sind.

4. Trennwand **W** <16> nach einem der Ansprüche 1 bis 3, welche mindestens vier alkalikationenleitende Festelektrolytkeramiken **F_{A}** <18>, **F_{B}** <19>, **F_{C}** <28> und **F_{D}** <29> umfasst.

5. Trennwand **W** <16> nach Anspruch 4, wobei das Trennelement **R_{T}** <17> kreuzförmig oder gitterförmig ist.

6. Trennwand **W** <16> nach einem der Ansprüche 1 bis 5, wobei das Rahmenelement **R** <2> ein Material umfasst, welches aus der Gruppe bestehend aus Kunststoff, Glas, Holz ausgewählt ist.

7. Trennwand **W** <16> nach einem der Ansprüche 1 bis 6, wobei die von der Trennwand W <16> umfassten alkalikationenleitenden Festelektrolytkeramiken unabhängig voneinander eine Struktur der Formel M^{I}_{1+2w+x-y+z} M^{II}_{w} M^{III}ₓ Zr^{IV}_{2-w-x-y} M^{V}_{y} (SiO₄)_{z} (PO₄)_{3-z} aufweisen,
wobei M' ausgewählt aus Na⁺, Li⁺ ist,
M" ein zweiwertiges Metallkation ist,
M^{III} ein dreiwertiges Metallkation ist,
M^{V} ein fünfwertiges Metallkation ist,
die römischen Indizes I, II, III, IV, V die Oxidationszahlen angeben, in der die jeweiligen Metallkationen vorliegen,
und w, x, y, z reelle Zahlen sind, wobei gilt, dass 0 ≤ x < 2, 0 ≤ y < 2, 0 ≤ w < 2, 0 ≤ z < 3,
und wobei w, x, y, z so gewählt werden, dass 1 + 2w + x - y + z ≥ 0 und 2 - w - x - y ≥ 0 gilt.

8. Elektrolysezelle E <1>, umfassend
- mindestens eine Anodenkammer **K_{A}** <11> mit mindestens einem Zulauf **Z_{KA}** <110>, mindestens einem Ablauf **A_{KA}** <111> und einem Innenraum **I_{KA}** <112>, der eine anodische Elektrode **E_{A}** <113> umfasst,
- mindestens eine Kathodenkammer **K_{K}** <12> mit mindestens einem Zulauf **Z_{KK}** <120>, mindestens einem Ablauf **A_{KK}** <121 > und einem Innenraum **I_{KK}** <122>, der eine kathodische Elektrode **E_{K}** <123> umfasst,
- und gegebenenfalls mindestens eine dazwischen liegende Mittelkammer **K_{M}** <13> mit mindestens einem Zulauf **Z_{KM}** <130>, mindestens einem Ablauf **A_{KM}** <131 > und einem Innenraum **I_{KM}** <132>,
wobei dann **I_{KA}** <112> und **I_{KM}** <132> durch eine Diffusionsbarriere **D** <14> voneinander abgetrennt sind, und **A_{KM}** <131> durch eine Verbindung **V_{AM}** <15> mit dem Zulauf **Z_{KA}** <110> verbunden ist, so dass durch die Verbindung **V_{AM}** <15> Flüssigkeit aus **I_{KM}** <132> in **I_{KA}** <112> geleitet werden kann,
wobei
- in den Fällen, in denen die Elektrolysezelle **E** <1> keine Mittelkammer **K_{M}** <13> umfasst, **I_{KA}** <112> und **I_{KK}** <122> durch eine Trennwand **W** <16> nach einem der Ansprüche 1 bis 7 voneinander abgetrennt sind,
- in den Fällen, in denen die Elektrolysezelle **E** <1> mindestens eine Mittelkammer **K_{M}** <13> umfasst, **I_{KA}** <112> und **I_{KM}** <132> durch eine Trennwand **W** <16> nach einem der Ansprüche 1 bis 7 voneinander abgetrennt sind,
**dadurch gekennzeichnet, dass**
die von der Trennwand **W** <16> umfassten alkalikationenleitenden Festelektrolytkeramiken den Innenraum **I_{KK}** <122> auf der Seite **S_{KK}** <161 > über die Oberfläche **O_{KK}** <163> direkt kontaktieren,
und
- in den Fällen, in denen die Elektrolysezelle E <1> keine Mittelkammer **K_{M}** <13> umfasst, die von der Trennwand **W** <16> umfassten alkalikationenleitenden Festelektrolytkeramiken den Innenraum **I_{KA}** <112> auf der Seite **S_{A/MK}** <162> über die Oberfläche **O_{A/MK}** <164> direkt kontaktieren,
- in den Fällen, in denen die Elektrolysezelle **E** <1> mindestens eine Mittelkammer **K_{M}** <13> umfasst, die von der Trennwand **W** <16> umfassten alkalikationenleitenden Festelektrolytkeramiken den Innenraum **I_{KM}** <132> auf der Seite **S_{A/MK}** <162> über die Oberfläche **O_{A/MK}** <164> direkt kontaktieren.

9. Elektrolysezelle **E** <1> nach Anspruch 8, welche keine Mittelkammer **K_{M}** <13> umfasst.

10. Elektrolysezelle **E** <1> nach Anspruch 8, welche mindestens eine Mittelkammer **K_{M}** <13> umfasst.

11. Elektrolysezelle **E** <1> nach Anspruch 10, wobei die Verbindung **V_{AM}** <15> innerhalb der Elektrolysezelle **E** <1> ausgebildet ist.

12. Verfahren zur Herstellung einer Lösung **L₁** <21> eines Alkalimetallalkoholats XOR im Alkohol ROH, wobei X ein Alkalimetallkation ist und R ein Alkylrest mit 1 bis 4 Kohlenstoffatomen ist,
(α) wobei in einer Elektrolysezelle **E** <1> nach Anspruch 9 die folgenden, gleichzeitig ablaufenden Schritte (α1), (α2), (α3) durchgeführt werden:
(α1) eine Lösung **L₂** <22> umfassend den Alkohol ROH wird durch **K_{K}** <12> geleitet,
(α2) eine neutrale oder alkalische, wässrige Lösung **L₃** <23> eines Salzes **S** umfassend X als Kation wird durch **K_{A}** <11> geleitet,
(α3) zwischen **E_{A}** <113> und **E_{K}** <123> wird Spannung angelegt,
oder
(β) wobei in einer Elektrolysezelle **E** <1> nach Anspruch 10 oder 11 die folgenden, gleichzeitig ablaufenden Schritte (β1), (β2), (β3) durchgeführt werden:
(β1) eine Lösung **L₂** <22> umfassend den Alkohol ROH wird durch **K_{K}** <12> geleitet,
(β2) eine neutrale oder alkalische, wässrige Lösung **L₃** <23> eines Salzes **S** umfassend X als Kation wird durch **K_{M}** <13>, dann über **V_{AM}** <15>, dann durch **K_{A}** <11> geleitet,
(β3) zwischen **E_{A}** <113> und **E_{K}** <123> wird Spannung angelegt,
wodurch am Ablauf **A_{KK}** <121> die Lösung **L₁** <21> erhalten wird, wobei die Konzentration von XOR in **L₁** <21> höher ist als in **L₂** <22>,
und wodurch am Ablauf **A_{KA}** <111> eine wässrige Lösung **L₄** <24> von **S** erhalten wird, wobei die Konzentration von **S** in **L₄** <24> geringer ist als in **L₃** <23>.

13. Verfahren nach Anspruch 12, wobei X aus der Gruppe bestehend aus Li⁺, Na⁺, K⁺ ausgewählt ist.

14. Verfahren nach Anspruch 12 oder 13, wobei **S** ein Halogenid, Sulfat, Sulfit, Nitrat, Hydrogencarbonat oder Carbonat von X ist.

15. Verfahren nach einem der Ansprüche 12 bis 14, wobei R aus der Gruppe bestehend aus Methyl, Ethyl ausgewählt ist.

## Claims

1. Dividing wall **W** <16> comprising one side **S_{KK}** <161> having the surface **O_{KK}** <163> and, opposite the side **S_{KK}** <161>, a side **S_{A/MK}** <162> having the surface **O_{A/MK}** <164>,
wherein the dividing wall **W** <16> encompasses a frame element **R** <2> composed of two opposite parts **R₁** <201> and **R₂** <202>, with at least two alkali metal cation-conducting solid-state electrolyte ceramics **F_{A}** <18> and **F_{B}** <19> disposed therebetween,
wherein **R₁** <201> is directly contactable via the surface **O_{KK}** <163>,
wherein **R₂** <202> is directly contactable via the surface **O_{A/MK}** ≤ 164>,
wherein the frame element **R** <2> forms an edge element **R_{R}** <20> and a separating element **R_{T}** <17>,
wherein the edge element **R_{R}** <20> at least partly bounds the surfaces **O_{KK}** <163> and **O_{A/MK}** <164>,
and wherein the separating element **R_{T}** <17> lies between the alkali metal cation-conducting solid-state electrolyte ceramics encompassed by the dividing wall **W** <16> and separates these from one another,
such that the alkali metal cation-conducting solid-state electrolyte ceramics encompassed by the dividing wall **W** <16> are directly contactable both via the surface **O_{KK}** <163> and via the surface **O_{A/MK}** <164>,
**characterized in that**
**R₁** <201> and **R₂** <202> are secured to one another by at least one securing element **B_{R}** <91> at the edge element **R_{R}** <20>,
and **R₁** <201> and **R₂** <202> are secured to one another by at least one securing element **B_{T}** <92> at the separating element **R_{T}** <17>.

2. Dividing wall **W** <16> according to Claim 1, wherein the at least one securing element **B_{R}** <91> and the at least one securing element **B_{T}** <92> are in one-piece form together with at least one of the parts **R₁** <201> and **R₂** <202>.

3. Dividing wall **W** <16> according to Claim 1 or 2, wherein the at least one securing element **B_{R}** <91> and the at least one securing element **B_{T}** <92> are each in the form of mutually engaging hooks **B_{H}** <93>.

4. Dividing wall **W** <16> according to any of Claims 1 to 3, comprising at least four alkali metal cation-conducting solid-state electrolyte ceramics **F_{A}** <18>, **F_{B}** <19>, **F_{C}** <28> and **F_{D}** <29>.

5. Dividing wall **W** <16> according to Claim 4, wherein the separating element **R_{T}** <17> takes the form of a cross or grid.

6. Dividing wall **W** <16> according to any of Claims 1 to 5, wherein the frame element **R** <2> comprises a material selected from the group consisting of plastic, glass, wood.

7. Dividing wall **W** <16> according to any of Claims 1 to 6, wherein the alkali metal cation-conducting solid-state electrolyte ceramics encompassed by the dividing wall **W** <16> independently have a structure of the formula M^{I}_{1+2w+x-}y_{+z} M^{II}_{w} M^{III}_{X} Zr^{IV}_{2-w-x-y} M^{V}_{y} (SiO₄)_{z} (PO₄)_{3-z},
where M^{I} is selected from Na⁺ and Li⁺,
M^{II} is a divalent metal cation,
M^{III} is a trivalent metal cation,
M^{V} is a pentavalent metal cation,
the Roman indices I, II, III, IV, V indicate the oxidation numbers in which the respective metal cations exist,
and w, x, y, z are real numbers, where 0 ≤ x < 2, 0 ≤ y < 2, 0 ≤ w < 2, 0 ≤ z < 3,
and where w, x, y, z are chosen such that 1 + 2w + x - y + z ≥ 0 and 2 - w - x - y ≥ 0.

8. Electrolysis cell **E** <1> comprising
- at least one anode chamber **K_{A}** <11> having at least one inlet **Z_{KA}** <110>, at least one outlet **A_{KA}** <111>, and an interior **I_{KA}** <112> comprising an anodic electrode **E_{A}** <113>,
- at least one cathode chamber **K_{K}** <12> having at least one inlet **Z_{KK}** <120>, at least one outlet **A_{KK}** <121>, and an interior **I_{KK}** <122> comprising a cathodic electrode **E_{K}** <123>,
- and optionally at least one interposed middle chamber **K_{M}** <13> having at least one inlet **Z_{KM}** <130>, at least one outlet **A_{KM}** <131> and an interior **I_{KM}** <132>,
where **I_{KA}** <112> and **I_{KM}** <132> are then divided from one another by a diffusion barrier **D** <14>, and **A_{KM}** <131> is connected by a connection **V_{AM}** <15> to the inlet **Z_{KA}** <110>, such that liquid can be passed from **I_{KM}** <132> into **I_{KA}** <112> via the connection **V_{AM}** <15>
where
- in the cases in which the electrolysis cell **E** <1> does not comprise a middle chamber **K_{M}** <13>, **I_{KA}** <112> and **I_{KK}** <122> are divided from one another by a dividing wall **W** <16> according to any of Claims 1 to 7,
- in the cases in which the electrolysis cell **E** <1> comprises at least one middle chamber **K_{M}** <13>, **I_{KA}** <112> and **I_{KM}** <132> are divided from one another by a dividing wall **W** <16> according to any of Claims 1 to 7,
**characterized in that**
the alkali metal cation-conducting solid-state electrolyte ceramics encompassed by the dividing wall **W** <16> directly contact the interior **I_{KK}** <122> on the **S_{KK}** <161> side via the surface **Oxx** <163>,
and
- in the cases in which the electrolysis cell **E** <1> does not comprise a middle chamber **K_{M}** <13>, the alkali metal cation-conducting solid-state electrolyte ceramics encompassed by the dividing wall **W** <16> directly contact the interior **I_{KA}** <112> on the **S_{A/MK}** <162> side via the surface **O_{A/MK}** <164>,
- in the cases in which the electrolysis cell **E** <1> comprises at least one middle chamber **K_{M}** <13>, the alkali metal cation-conducting solid-state electrolyte ceramics encompassed by the dividing wall **W** <16> directly contact the interior **I_{KM}** <132> on the **S_{A/MK}** <162> side via the surface **O_{A/MK}** <164>.

9. Electrolysis cell **E** <1> according to Claim 8 which does not comprise a middle chamber **K_{M}** <13>.

10. Electrolysis cell **E** <1> according to Claim 8 which comprises at least one middle chamber **K_{M}** <13>.

11. Electrolysis cell **E** <1> according to Claim 10, wherein the connection **V_{AM}** <15> is formed within the electrolysis cell **E** <1>.

12. Process for producing a solution **L₁** <21> of an alkali metal alkoxide XOR in the alcohol ROH, where X is an alkali metal cation and R is an alkyl radical having 1 to 4 carbon atoms,
(α) wherein the following steps (α1), (α2), (α3) that proceed simultaneously are conducted in an electrolysis cell **E** <1> according to Claim 9:
(α1) a solution **L₂** <22> comprising the alcohol ROH is routed through **K_{K}** <12>,
(α2) a neutral or alkaline, aqueous solution **L₃** <23> of a salt S comprising X as cation is routed through **K_{A}** <11>,
(α3) voltage is applied between **E_{A}** <113> and **E_{K}** <123>, or
(β) wherein the following steps (β1), (β2), (β3) that proceed simultaneously are conducted in an electrolysis cell **E** <1> according to Claim 10 or 11:
(β1) a solution **L₂** <22> comprising the alcohol ROH is routed through **K_{K}** <12>,
(β2) a neutral or alkaline, aqueous solution **L₃** <23> of a salt **S** comprising X as cation is routed through **K_{M}** <13>, then via **V_{AM}** <15>, then through **K_{A}** <11>,
(β3) voltage is applied between **E_{A}** <113> and **E_{K}** <123>,
which affords the solution **L₁** <21> at the outlet **A_{KK}** <121>, with a higher concentration of XOR in **L₁** <21> than in **L₂** <22>,
and which affords an aqueous solution **L₄** <24> of **S** at the outlet **A_{KA}** <111>, with a lower concentration of **S** in **L₄** <24> than in **L₃** <23>.

13. Process according to Claim 12, wherein X is selected from the group consisting of Li⁺, Na⁺, K⁺.

14. Process according to Claim 12 or 13, wherein **S** is a halide, sulfate, sulfite, nitrate, hydrogencarbonate or carbonate of X.

15. Process according to any of Claims 12 to 14, wherein R is selected from the group consisting of methyl and ethyl.

## Revendications

1. Paroi de séparation **W** <16>, qui comprend une face **S_{KK}** <161> ayant la surface **O_{KK}** <163> et une face **S_{A/MK}** <162>, opposée à la face **S_{KK}** <161>, ayant la surface **O_{A/MK}** <164>,
la paroi de séparation **W** <16> comprenant un élément cadre **R** <2> constitué de deux parties opposées l'une à l'autre **R₁** <201> et **R₂** <202>, entre lesquelles sont disposées au moins deux céramiques électrolytes solides conductrices de cations alcalins **F_{A}** <18> et **F_{B}** <19>,
**R₁** <201> permettant un contact direct par l'intermédiaire de la surface **O_{KK}** <163>,
**R₂** <202> permettant un contact direct par l'intermédiaire de la surface **O_{A/MK}** <164>,
l'élément cadre **R** <2> formant un élément de bord **R_{R}** <20> et un élément séparateur **R_{T}** <17>,
l'élément de bord **R_{R}** <20> délimitant au moins partiellement les surfaces **O_{KK}** <163> et **O_{A/MK}** <164>,
et l'élément séparateur **R_{T}** <17> étant situé entre les céramiques électrolytes solides conductrices de cations alcalins entourées par la paroi de séparation **W** <16> et séparant ces dernières l'une de l'autre,
de façon à permettre un contact direct des céramiques électrolytes solides conductrices de cations alcalins entourées par la paroi de séparation **W** <16> tant par l'intermédiaire de la surface **Oxx** <163> que par l'intermédiaire de la surface **O_{A/MK}** <164>,
**caractérisée en ce que**
**R₁** <201> et **R₂** <202> sont fixées l'une à l'autre par au moins un élément de fixation **B_{R}** <91> au niveau de l'élément de bord **R_{R}** <20>,
et que **R₁** <201> et **R₂** <202> sont fixées l'une à l'autre par au moins un élément de fixation **B_{T}** <92> au niveau de l'élément séparateur **R_{T}** <17>.

2. Paroi de séparation **W** <16> selon la revendication 1, l'au moins un élément de fixation **B_{R}** <91> et l'au moins un élément de fixation **B_{T}** <92> étant réalisés d'un seul tenant avec au moins l'une des parties **R₁** <201> et **R₂** <202>.

3. Paroi de séparation **W** <16> selon la revendication 1 ou 2, l'au moins un élément de fixation **B_{R}** <91> et l'au moins un élément de fixation **B_{T}** <92> étant chacun réalisés sous forme de crochets **B_{H}** <93> entrant en prise l'un avec l'autre.

4. Paroi de séparation **W** <16> selon l'une des revendications 1 à 3, qui comprend au moins quatre céramiques électrolytes solides conductrices de cations alcalins **F_{A}** <18>, **F_{B}** <19>, **F_{C}** <28> et **F_{D}** <29>.

5. Paroi de séparation **W** <16> selon la revendication 4, l'élément séparateur **R_{T}** <17> étant en forme de croix ou de grille.

6. Paroi de séparation **W** <16> selon l'une des revendications 1 à 5, l'élément cadre **R** <2> comprenant un matériau qui est choisi dans le groupe consistant en du plastique, du verre, du bois.

7. Paroi de séparation **W** <16> selon l'une des revendications 1 à 6, les céramiques électrolytes solides conductrices de cations alcalins entourées par la paroi de séparation **W** <16> présentant indépendamment l'une de l'autre une structure de formule M^{I}_{1+2w+x-y+z} M^{II}_{w} M^{III}ₓ Zr^{IV}_{2-w-x-y} M^{V}_{y} (SiO₄)_{z} (PO₄)_{3-z},
M^{I} étant choisi parmi Na⁺, Li⁺,
M^{II} étant un cation d'un métal divalent,
M^{III} étant un cation d'un métal trivalent,
M^{V} étant un cation d'un métal pentavalent,
les indices romains I, II, III, IV, V indiquant les nombres d'oxydation sous lesquels se trouvent les différents cations métalliques,
et w, x, y, z représentent des nombres réels, avec 0 ≤ x < 2, 0 ≤ y < 2, 0 ≤ w < 2, 0 ≤ z < 3, et w, x, y, z étant choisis de telle sorte que 1 + 2w + x - y + z ≥ 0 et 2 - w - x - y ≥ 0.

8. Cellule d'électrolyse **E** <1> comprenant
- au moins une chambre anodique **K_{A}** <11>, comportant au moins une arrivée **Z_{KA}** <110>, au moins une évacuation **A_{KA}** <111> et un espace intérieur **I_{KA}** <112>, qui comprend une électrode anodique **E_{A}** <113>,
- au moins une chambre cathodique **K_{K}** <12> comportant au moins une arrivée **Z_{KK}** <120>, au moins une évacuation **A_{KK}** <121> et un espace intérieur **I_{KK}** <122>, qui comprend une électrode cathodique **E_{K}** <123>,
- et éventuellement au moins une chambre centrale **K_{M}** <13>, disposée entre elles, comportant au moins une arrivée **Z_{KM}** <130>, au moins une évacuation **A_{KM}** <131> et un espace intérieur **I_{KM}** <132>,
**I_{KA}** <112> et **I_{KM}** <132> étant alors séparés l'un de l'autre par une barrière de diffusion **D** <14>, et **A_{KM}** <131> étant relié par un raccord **V_{AM}** <15> à l'arrivée **Z_{KA}** <110>, de sorte que le liquide puisse, par le raccord **V_{AM}** <15>, être guidé de **I_{KM}** <132> dans **I_{KA}** <112>,
dans laquelle
- dans les cas dans lesquels la cellule d'électrolyse **E** <1> ne comprend pas de chambre centrale **K_{M}** <13>, **I_{KA}** <112> et **I_{KK}** <122> sont séparés l'un de l'autre par une paroi de séparation **W** <16> selon l'une des revendications 1 à 7,
- dans les cas dans lesquels la cellule d'électrolyse **E** <1> comprend au moins une chambre centrale **K_{M}** <13>, **I_{KA}** <112> et **I_{KM}** <132> sont séparés l'un de l'autre par une paroi de séparation **W** <16> selon l'une des revendications 1 à 7,
**caractérisée en ce que**
les céramiques électrolytes solides conductrices de cations alcalins entourées par la paroi de séparation **W** <16> entrent en contact direct avec l'espace intérieur **I_{KK}** <122> sur la face **S_{KK}** <161> par l'intermédiaire de la surface **Oxx** <163>,
et
- dans les cas dans lesquels la cellule d'électrolyse **E** <1> ne comprend pas de chambre centrale **K_{M}** <13>, les céramiques électrolytes solides conductrices de cations alcalins entourées par la paroi de séparation **W** <16> entrent directement en contact avec l'espace intérieur **I_{KA}** <112> sur la face **S_{A/MK}** <162> par l'intermédiaire de la surface **O_{A/MK}** <164>,
- dans les cas dans lesquels la cellule d'électrolyse **E** <1> comprend au moins une chambre centrale **K_{M}** <13>, les céramiques électrolytes solides conductrices de cations alcalins entourées par la paroi de séparation **W** <16> entrent en contact direct avec l'espace intérieur **I_{KM}** <132> sur la face **S_{A/MK}** <162> par l'intermédiaire de la surface **O_{A/MK}** <164>.

9. Cellule d'électrolyse **E** <1> selon la revendication 8, qui ne comprend pas de chambre centrale **K_{M}** <13>.

10. Cellule d'électrolyse **E** <1> selon la revendication 8, qui comprend au moins une chambre centrale **K_{M}** <13>.

11. Cellule d'électrolyse **E** <1> selon la revendication 10, le raccord **V_{AM}** <15> étant réalisé à l'intérieur de la cellule d'électrolyse **E** <1>.

12. Procédé de fabrication d'une solution **L₁** <21> d'un alcoolate de métal alcalin XOR dans l'alcool ROH, dans lequel X représente un cation d'un métal alcalin et R représente un radical alkyle ayant 1 à 4 atomes de carbone,
(α) dans lequel, dans une cellule d'électrolyse **E** <1> selon la revendication 9, on met en œuvre les étapes simultanées (α1), (α2), (α3) suivantes :
(α1) on fait passer par **K_{K}** <12> une solution **L₂** <22> comprenant l'alcool ROH,
(α2) on fait passer par **K_{A}** <11> une solution aqueuse, neutre ou alcaline, **L₃** <23> d'un sel **S** comprenant X en tant que cation,
(α3) on applique une tension entre **E_{A}** <113> et **E_{K}** <123>,
ou
(β) dans une cellule d'électrolyse **E** <1> selon la revendication 10 ou 11, on met en œuvre les étapes simultanées suivantes (β1), (β2), (β3) :
(β1) on fait passer par **K_{K}** <12> une solution **L₂** <22> comprenant l'alcool ROH,
(β2) on fait passer par **K_{M}** <13>, puis par **V_{AM}** <15>, puis par **K_{A}** <11>, une solution aqueuse, neutre ou alcaline **L₃** <23> d'un sel **S** comprenant X en tant que cation,
(β3) on applique une tension entre **E_{A}** <113> et **E_{K}** <123>,
pour obtenir à l'évacuation **A_{KK}** <121> la solution **L₁** <21>, la concentration de XOR dans **L₁** <21> étant plus élevée que dans **L₂** <22>,
et pour obtenir à l'évacuation **A_{KA}** <111> une solution aqueuse **L₄** <24> de **S,** la concentration de **S** dans **L₄** <24> étant plus petite que dans **L₃** <23>.

13. Procédé selon la revendication 12, dans lequel X est choisi dans le groupe consistant en Li⁺, Na⁺, K⁺.

14. Procédé selon la revendication 12 ou 13, dans lequel **S** représente un halogénure, un sulfate, un sulfite, un nitrate, un hydrogénocarbonate ou un carbonate de X.

15. Procédé selon l'une des revendications 12 à 14, dans lequel R est choisi dans le groupe consistant en méthyle, éthyle.
